# EUROPÄISCHE PATENTANMELDUNG

(11) **EP 1 647 437 A1**
(43) Veröffentlichungstag der Anmeldung: **19.04.2006**
(21) Anmeldenummer: 05023616.5
(22) Anmeldetag: 02.12.2002
(51) Int. Cl.: B60N 2/02, B60N 2/06

(54) **Verfahren zur Steuerung einer Verstelleinrichtung eines Kraftfahrzeugs**

(30) Priorität: 01.12.2001 DE 10159136; 30.04.2002 DE 10219284; 04.06.2002 DE 10224626; 12.06.2002 DE 10226006
(62) Teilanmeldung aus: 02804157.2
(71) Anmelder: Brose Fahrzeugteile GmbH & Co. Kommanditgesellschaft, Coburg, 96450 Coburg (DE)
(72) Erfinder: Woller, Alexander, 97273 Kürnach (DE); Carl, Ingo, 97469 Gochsheim (DE); Steiner, Michael, 93049 Regensburg (DE); Fuchs, Thorsten, 95349 Thurnau (DE); Schiegel, Stefan, 96231 Staffelstein (DE); Rösch, Thomas, 06268 Querfurt (DE)

(57) **Zusammenfassung**

Die Erfindung bezieht sich auf ein Verfahren zur Steuerung einer Verstelleinrichtung eines Kraftfahrzeugs, insbesondere einer Kraftfahrzeugsitzverstellung, die mindestens einen Verstellweg zwischen einem ersten Anschlag und einem zweiten Anschlag aufweist, wobei durch eine Nutzeraktion eine Verstellposition der Verstelleinrichtung innerhalb des Verstellweges einstellbar ist, die jeweilige Verstellposition innerhalb des Verstellweges bestimmt wird und ein Schutzstopp in den Verstellweg gesetzt ist, der in Abhängigkeit von der Verstellposition eine Reduktion der Verstellenergie, insbesondere zum Stoppen der Verstellbewegung im Bereich einer mechanischen Blockierung der Verstellbewegung, auslöst. Erfindungsgemäß ist vorgesehen, daß zur Korrektur der Position des Schutzstopps ein neuer, nicht durch die Nutzeraktion wirkungslos schaltbarer Schutzstopp gesetzt wird, wenn eine von der Verstellbewegung der Verstelleinrichtung abhängige Bedingung erfüllt ist.

## Beschreibung

Die Erfindung betrifft ein Verfahren zur Steuerung einer Verstelleinrichtung eines Kraftfahrzeuges, insbesondere einer Kraftfahrzeugsitzverstellung.

Ein derartiges Verfahren bezieht sich insbesondere auf die Steuerung einer Verstelleinrichtung, die mindestens einen Verstellweg zwischen einem ersten Anschlag und einem zweiten Anschlag aufweist und bei der durch eine Nutzeraktion eine Verstellposition der Verstelleinrichtung innerhalb des Verstellweges einstellbar ist. Hierbei wird die jeweilige Verstellposition innerhalb des Verstellweges (durch an sich bekannte Mittel zur Positionserkennung) bestimmt und es wird ein (elektrisch wirkender) Schutzstop in den Verstellweg gesetzt, der in Abhängigkeit von der Verstellposition eine automatisch Reduktion der Verstellenergie bewirkt, insbesondere ein Stoppen der Verstellbewegung im Bereich einer mechanischen Blockierung der Verstellbewegung. Die mechanische Blockierung kann dabei einerseits durch einen der beiden Anschläge an den Grenzen des Verstellweges ausgelöst sein oder andererseits durch ein im Verstellweg befindliches Hindernis, wie zum Beispiel eine hinter dem Kraftfahrzeugsitz abgestellte Getränkekiste.

Unter einer Nutzeraktion wird hierbei eine Bedienung einer Betätigungseinrichtung der Verstelleinrichtung durch die auf dem entsprechenden Kraftfahrzeugsitz befindliche Person verstanden, mit der die Verstellposition des Kraftfahrzeugsitzes beziehungsweise eines zu verstellenden Teiles des Kraftfahrzeugsitzes veränderbar ist. Unter einem elektrisch wirkenden Schutzstop wird ein Schutzstop verstanden, der nicht durch einen mechanischen Anschlag gebildet wird, sondern der vielmehr elektrisch auf die Verstellbewegung der Verstelleinrichtung einwirkt, um diese abzubremsen.

Bisherige Steuerungsverfahren für Verstelleinrichtungen von Kraftfahrzeugen nutzen ein direkt messendes System zur Bestimmung der Verstellposition eines Kraftfahrzeugsitzes. Hierzu erfaßt ein Potentiometer die jeweils aktuelle Verstellposition entlang eines Verstellweges. Jeder Verstellposition ist ein Widerstandswert zugeordnet. Durch die direkte Kopplung zwischen Widerstandswert und Verstellbewegung entstehen keine Fehler zwischen der gemessenen Position und der realen Verstellposition, wenn der Meßwert aus dem Potentiometer fehlerfrei ausgelesen werden kann.

Aufgrund des hohen Verschleißes von Potentiometern zur Wegmessung und der zusätzlich benötigten Verkabelung werden zunehmend Wegerfassungssysteme zur Steuerung von Kraftfahrzeugsitzverstellungen eingesetzt, die zur Positionsbestimmung die rotatorische Antriebsbewegung des Antriebsmotors detektieren. Hierzu wird beispielsweise der Motorstrom ausgewertet oder die Antriebsbewegung mittels Sensoren erfaßt. Besonders Hallsensoren können für eine derartige Detektion genutzt werden. Diese Art der indirekten Messung der Verstellposition durch die Detektion der Antriebsbewegung führt jedoch zu Meßfehlern aufgrund von Ungenauigkeiten zwischen der detektierten Position und der realen Verstellposition, die hierbei wesentlich von einander abweichen können. Diese Ungenauigkeiten können programmtechnisch nur zum Teil behoben werden. Wird eine Verstelleinrichtung eines Kraftfahrzeugsitzes mehrfach, beispielsweise aufgrund häufiger Fahrerwechsel, betätigt, kann dies zu signifikanten Positionsfehlern führen.

Die zuvor geschilderten Positionserfassungsysteme für Kraftfahrzeugverstelleinrichtungen werden zum gesteuerten Anfahren von zuvor gespeicherten MemoryPositionen genutzt, die in einen Verstellweg zwischen einem ersten mechanischen Anschlag und einem zweiten mechanischen Anschlag konfigurierbar sind. Zur Konfiguration wird ausgenutzt, daß mittels eines des zuvor genannten Positionserfassungssystems die Verstellposition innerhalb des Verstellweges bestimmt wird.

Neben dieser Komfortfunktion wird im Bereich eines mechanischen Anschlags ein Schutzstop in den Verstellweg gesetzt um die mechanische Belastung des Verstellsystems zu reduzieren. Der Schutzstop ermöglicht dabei in Abhängigkeit von der bestimmten Verstellposition eine automatische Reduktion der Verstellenergie. Diese Reduktion ermöglicht ein sanftes Abbremsen der Verstellbewegung. Im Idealfall erreicht der zu verstellende Teil der Verstelleinrichtung den Anschlag gerade nicht. Um dies auch unter Einbeziehung von weiteren Faktoren oder Toleranzen zu gewährleisten, wird der Antriebsmotor beispielsweise im Bereich des Schutzstops elektronisch gebremst oder abgeschalten, was zu einem Stopen der Verstellbewegung der Verstelleinrichtung im Bereich dieses Schutzstops führt.

Die zuvor dargelegten signifikanten Positionsfehler verursachen zudem eine Verschiebung der Positionen der Schutzstops von oder zu den realen mechanischen Anschlägen, deren Position gegenüber der Verschiebung feststehend verbleiben. Eine ungünstige Verschiebung der Schutzstops mit zunehmendem Abstand von den mechanischen Abständen würde zu einer wesentlichen Einschränkung des Verstellweges führen, wenn die Schutzstops ein Überfahren, beispielsweise durch Trägheitskraft, in Richtung auf die mechanischen Anschläge aus Belastungsgründen verhindern sollten.

Aus der US-PS 5,081,586 ist es bekannt, in den Verstellweg einer Kraftfahrzeugverstelleinrichtung einen Schutzstop zu setzen, der durch eine Nutzeraktion überfahrbar ist, indem der Benutzer beim Erreichen des Schutzstops einen entsprechenden Schalter betätigt. Hierdurch besteht das Problem, daß durch derartige Nutzeraktionen ein wiederholtes hartes Anfahren der den Verstellweg begrenzenden mechanischen Anschläge erfolgen kann, mit einer entsprechenden Belastung der Verstelleinrichtung.

Aus der US-PS 4,881,020 ist es bekannt, Stops in einer Sitzverstelleinrichtung beim Öffnen und Schließen der Fahrzeugtür (entsprechend einem Ein- oder Aussteigen des Fahrers) zu setzen.

Der Erfindung liegt das Problem zu Grunde, ein Verfahren zur Steuerung einer Verstelleinrichtung eines Kraftfahrzeuges anzugeben, das die mechanische Belastung des Verstellsystems der Verstelleinrichtung durch eine Reduktion der Anzahl der Verstellungen in den mechanischen Anschlag verringert, ohne daß der zur Verfügung stehende Verstellweg durch das Verfahren signifikant eingeschränkt wird.

Dieses Problem wird durch ein Verfahren zur Steuerung einer Verstelleinrichtung eines Kraftfahrzeuges, insbesondere einer Kraftfahrzeugsitzverstellung, mit den Merkmalen des Patentanspruchs 1 gelöst. Vorteilhafte Weiterbildungen der Erfindung sind den abhängigen Ansprüchen zu entnehmen.

Danach wird zur Korrektur der Position des Schutzstops ein neuer, nicht durch die Nutzeraktion wirkungslos schaltbarer Schutzstop gesetzt, wenn eine von der Verstellbewegung der Verstelleinrichtung abhängige Bedingung erfüllt ist.

Unter einem nicht durch eine Nutzeraktion wirkungslos schaltbaren Schutzstop wird dabei ein Stop verstanden, der ― unabhängig von einer möglichen Nutzeraktion ― eine Reduktion der Verstellenergie mit dem Ziel der Verlangsamung oder des Abstoppens der Verstellbewegung bewirkt, wenn die Verstellposition der Position des Schutzstops entspricht. Es ist demzufolge für den Benutzer nicht möglich, durch Bedienung einer der Verstelleinrichtung zugeordneten Betätigungseinrichtung den Schutzstop zu überfahren. Der Nutzer kann also nicht unmittelbar über die Betätigungseinrichtung der Verstelleinrichtung auf den Schutzstop einwirken und diesen wirkungslos schalten, d.h., daß die Verstellbewegung unabhängig von einer möglichen Nutzeraktion unverändert fortgesetzt wird.

Die Erfindung beruht auf der Erkenntnis, daß ein durch den Benutzer nicht wirkungslos schaltbarer Schutzstop zur Reduzierung der mechanischen Belastung des Verstellsystems verwendet werden kann, ohne den für den Nutzer zur Verfügung stehenden Verstellweg zu stark einzuschränken, wenn beim Setzen dieses Schutzstops bestimmte von der Verstellbewegung abhängige Bedingungen erfüllt sind, die verhindern, daß ein nicht überfahrbarer (nicht wirkungslos schaltbarer) Schutzstop an einer Stelle gesetzt wird, die zu einer unnötigen Beschränkung des Verstellweges führte.

Bei dem Schutzstop handelt es sich vorzugsweise um einen elektrisch wirkenden Schutzstop, der eine automatische Reduktion der Verstellenergie bewirkt, wenn bei der Verstellbewegung eine Verstellposition erreicht wird, die der Position des Schutzstops entspricht.

In einer bevorzugten Ausführungsform der Erfindung lässt sich der Schutzstop nur durch eine Auswertelogik wirkungslos schalten, die laufend die Verstellbewegung der Verstelleinrichtung überwacht und auswertet, insbesondere anhand der Historie der einzelnen Verstellereignisse. Bei den Verstellereignissen kann es sich insbesondere um ein Stoppen der Verstellbewegung (z.B. aufgrund eines Schutzstops oder beim Erreichen eines der mechanischen Anschläge bzw. einer sonstigen Blockierung) handeln sowie um den Beginn einer Verstellbewegung (Anfahren der Verstelleinrichtung) oder um einen Richtungswechsel der Verstellbewegung.

Das wirkungslos Schalten des Schutzstops mittels der Auswertelogik erfolgt insbesondere zu dem Zweck, einen neuen Schutzstop zu setzen, also die Position des Schutzstops zu korrigieren. Die Bedingungen, die für eine Korrektur der Position des Schutzstopps erfüllt sein müssen, können insbesondere den Ort, den Zeitpunkt sowie die Anzahl der vorerwähnten Verstellereignisse betreffen.

Ein Schutzstop weist vorzugsweise einen Positionsparameter auf, der die durch den Schutzstop bezweckte Wirkung einer bestimmten Verstellposition zuordnet. Weiterhin weist der Schutzstop vorzugsweise einen Wirkungsparameter auf, der die mit der gewünschten Wirkung verbundene Funktionalität des Schutzstops demselben zuordnet. Eine gewünschte Wirkung ist beispielsweise die Reduktion der Verstellenergie in Richtung der zuvor detektierten Blockierung. Während in der Gegenrichtung, also in Richtung mit zunehmender Entfernung von der Blockierung die Verstellenergie vorzugsweise nicht reduziert wird. Verschiedene Funktionsmodi oder Wirkungsmodi können dabei unterschiedlichen Verstellmodi zugeordnet werden. Beispielsweise kann in einem Normierungsmodus nach dem durch den Schutzstop bedingten Stoppen mit geringer Verstellgeschwindigkeit in einem der Anschläge verfahren werden, um die aktuelle Verstellposition neu zu normieren.

Der Schutzstop soll also insbesondere ein Stoppen der Verstellbewegung im Bereich eines der Anschläge bewirken.

Gemäß einem Aspekt der Erfindung wird zusätzlich zu dem Setzen des Schutzstops ein diesem Schutzstop zugeordneter Einlernbereich bestimmt. Diese Zuordnung dient einer Wirkbeziehung zwischen diesem Schutzstop und dem Einlernbereich. Der Einlernbereich steuert die örtlichen Randbedingungen für ein Einlernen eines neuen Schutzstops, derart, das innerhalb dieses Einlernbereichs ein Setzen eines Schutzstops zugelassen wird, wobei dieser neu gesetzte Schutzstop dem jeweiligen Anschlag zugeordnet ist und somit in Richtung auf den Anschlag eine Reduktion der Verstellenergie ermöglicht. Die Zulassung des Setzens eines Schutzstops besagt, daß ein Setzen eines diesbezüglichen neuen Schutzstops in diesem Bereich noch von weiteren Kriterien abhängig sein kann, jedoch örtlich zwischen den Bereichsgrenzen dieses Einlernbereichs unter Ausschluss negativer weiterer Kriterien erfolgt.

Ein neuer Schutzstop wird dann gesetzt, wenn ein Korrekturbedürfnis des Wertes des bisherigen Schutzstops vorliegt. Beispielsweise ist der Zählwert gegen über der realen Position des mechanischen Anschlages wesentlich verschoben, so daß die bisherige Position des Schutzstops keine ausreichende Reduktion der Verstellenergie gewährleistet, bevor das verstellte Teil den Anschlag berührt. Handelt es sich um erwartete Verschiebungen innerhalb der Einlernbereichsgrenzen wird wie zuvor beschrieben verfahren. Liegt der Positionswert des Schutzstops, des Anschlages oder eines hierzu korrelierenden Wertes außerhalb dieses Einlernbereichs wird kein diesem Anschlag zugeordneter Schutzstop gesetzt. Jedoch können andere Maßnahmen getroffen werden oder andere nicht diesem Anschlag zugeordnete Schutzstops gesetzt werden.

Zum Bestimmen des Einlernbereiches werden die Bereichsgrenzen des Einlernbereiches in Abhängigkeit von einer Positionscharakteristik bestimmt. Insbesondere ist diese Positionscharakteristik die Position des zugehörigen Anschlags selbst, so daß die Grenzen des Einlernbereiches von dieser Position des Anschlages leicht und toleranzarm zu berechnen sind. Alternativ können auch andere Positionscharakteristika, wie beispielsweise eine Detektion einer bestimmten Verstellposition mittels Positionsdetektor genutzt werden, um die Bereichsgrenzen zu berechnen. Die Weite des Einlernbereiches, beispielsweise 20 mm, wird in Abhängigkeit von der Position des Anschlages derart berechnet, daß im Normalbetrieb der Kraftfahrzeugverstelleinrichtung eine Verschiebung zwischen ermittelter Position und realer Verstellposition im allgemeinen kleiner ist als die Weite des Einlernbereichs. Auf größere, unerwartete Verschiebungen kann das Steuerungsverfahren dann abweichend reagieren.

In einer vorteilhaften Ausgestaltung der Erfindung wird zur Bestimmung des Einlernbereiches eine Blockierung der Verstellbewegung an einem der Anschläge bestimmt, und die Bereichsgrenzen des Einlernbereiches werden in Abhängigkeit von der zur Blockierung der Verstellbewegung zugehörigen Verstellposition errechnet. Alternativ kann zur Positionsberechnung auch ein Schutzstop verwendet werden. Vorteilhafterweise werden die Bereichsgrenzen derart berechnet, daß die Blockierungsposition auf oder innerhalb der Bereichsgrenzen liegt.

Eine vorteilhafte Weiterbildung der Erfindung sieht vor, daß dem ersten mechanischen Anschlag ein erster Einlernbereich und dem zweiten mechanischen Anschlag ein zweiter Einlernbereich zugeordnet ist, und zwischen dem ersten Einlernbereich und dem zweiten Einlernbereich ein Sperrbereich vorgesehen ist. Dieser Sperrbereich dient wiederum als örtliche Randbedingung für das Setzen eines Schutzstops, derart, daß im Sperrbereich das Setzen eines neuen, dem mechanischen Anschlag zugeordneter Schutzstops verhindert wird.

Gemäß einer vorteilhaften Ausgestaltung dieser Weiterbildung der Erfindung wird zumindest einer der gesetzten Schutzstops deaktiviert, wenn innerhalb des Sperrbereiches eine Blockierung der Verstellbewegung bestimmt wird. Die Deaktivierung bewirkt, daß dieser bisherige Schutzstop in Richtung auf den zugeordneten mechanischen Anschlag überfahren werden kann, die Verstellenergie also nicht automatisch reduziert wird. Wird jedoch später nachfolgend wiederum eine Blockierung innerhalb des Einlernbereiches erkannt, kann der Schutzstop wieder aktiviert und auch neu positioniert werden.

Wenn eine Verstellposition außerhalb der bisherigen Einlernbereiche und des Sperrbereichs bestimmt wird, werden in einer vorteilhaften Weiterbildung der Erfindung alle Einlernbereiche und gesetzte Schutzstops deaktiviert. Dies bewirkt, daß das Setzen eines neuen Schutzstops, der einem mechanischen Anschlag zugeordnet wird, örtlich unabhängig ist, da keine Einlernbereiche aktiv sind. Wird eine Blockierung an einem mechanischen Anschlag erkannt, wird ein Schutzstop gesetzt und der zugehörige Einlernbereich in einer Recheneinheit berechnet und beide nichtflüchtig abgespeichert.

Eine vorteilhafte Weiterbildung der Erfindung sieht vor, daß die Entfernung zwischen einem ersten Schutzstop des zugehörigen ersten mechanischen Anschlags und einem zweiten Schutzstop des zugehörigen zweiten mechanischen Anschlags mit einer Mindestdistanz verglichen wird. Die Mindestdistanz wird hierzu aus einem Speicher ausgelesen. Die Mindestdistanz ist als Erfahrungswert vorgegeben und kann beispielsweise 80 Prozent des gewünschten Verstellweges betragen oder die Mindestdistanz wird aus ungestörten Verstellungen in die beiden Anschläge während der Bandendmontage des Kraftfahrzeugs aus der Entfernung der beiden Anschläge berechnet.

Wenn die Entfernung gleich oder kleiner ist als die Mindestdistanz wird vorteilhafterweise zumindest der eine der Schutzstops geändert, insbesondere verschoben oder deaktiviert. Für größere auftretende Positionsfehler ist es vorteilhaft, daß beide Schutzstops und die zugehörigen Einlernbereiche deaktiviert werden, wenn die Entfernung gleich oder kleiner ist als die Mindestdistanz. Derart wird das Verstellsystem , insbesondere die Schutzstops, neu normiert, wenn die Blockierung durch einen der Anschläge detektiert wird.

In einer vorteilhaften Ausgestaltung der Erfindung wird die Verstellgeschwindigkeit zumindest innerhalb der Einlernbereiche reduziert. Sind keine Schutzstops gesetzt, erfolgt mit einer hohen Wahrscheinlichkeit der Blockierungszustand des Verstellsystems an einem der Anschläge, was eine hohe mechanische Belastung des Verstellsystems verursacht. Um diese zu reduzieren wird auf den Anschlag ausgeübte Kraft durch die Geschwindigkeitsreduktion wesentlich verringert.

Vorteilhaft wird in Abhängigkeit von der Bestimmung einer ersten Position des dem ersten mechanischen Anschlag zugeordneten ersten Schutzstops eine zweite Position des dem zweiten mechanischen Anschlag zugeordneten zweiten Schutzstops bestimmt. Dies wird in einer bevorzugten Weiterbildung der Erfindung dadurch erreicht, daß der Verstellweg auf eine virtuelle Positionsachse abgebildet wird. Auf dieser virtuellen Positionsachse werden die Position des ersten Schutzstops und die Position des vom ersten Schutzstop positionsabhängigen zweiten Schutzstops fest angeordnet. Die aktuelle Verstellposition der Verstelleinrichtung zwischen den Anschlägen wird einem Positionswert auf der virtuellen Positionsachse zugeordnet, wobei diese virtuelle Positionsachse zum Verstellweg, vorzugsweise zu den Anschlägen, ausgerichtet wird, wenn eine Verschiebung der virtuellen Positionsachse zum Verstellweg ermittelt wird.

Demzufolge stehen die Positionen der beiden Schutzstops stets in einem festen örtlichen Verhältnis zueinander, weisen beispielsweise einen festen Abstand zueinander auf. Mit der Verschiebung des Positionswertes auf der virtuellen Achse wird vorzugsweise der Positionswert auch zu den Schutzstops verschoben, wobei die Schutzstops hierzu auf der virtuellen Achse ortsfest verbleiben.

Zusätzlich zu dem Setzen insbesondere des ersten Schutzstops wird ein diesem Schutzstop zugeordneter Einlernbereich bestimmt. Diese Zuordnung dient einer Wirkbeziehung zwischen diesem Schutzstop und dem Einlernbereich. Der Einlernbereich steuert die örtlichen Randbedingungen für ein Einlernen eines neuen Schutzstops, derart, daß innerhalb dieses Einlernbereichs ein Setzen eines Schutzstops zugelassen wird, wobei dieser neu gesetzte Schutzstop dem jeweiligen Anschlag zugeordnet ist und somit in Richtung auf den Anschlag eine Reduktion der Verstellenergie ermöglicht. Die Zulassung des Setzens eines Schutzstops besagt, daß ein Setzen eines diesbezüglichen neuen Schutzstops in diesem Bereich noch von weiteren Kriterien abhängig sein kann, jedoch örtlich zwischen den Bereichsgrenzen dieses Einlernbereichs unter Ausschluss negativer weiterer Kriterien erfolgt.

Ein neuer Schutzstop wird dann gesetzt, wenn ein Korrekturbedürfnis des Wertes des bisherigen Schutzstops vorliegt. Beispielsweise ist der Zählwert gegen über der realen Position des mechanischen Anschlages wesentlich verschoben, so daß die bisherige Position des Schutzstops keine ausreichende Reduktion der Verstellenergie gewährleistet, bevor das verstellte Teil den Anschlag berührt. Handelt es sich um erwartete Verschiebungen innerhalb der Einlernbereichsgrenzen wird wie zuvor beschrieben verfahren. Liegt der Positionswert des Schutzstops, des Anschlages oder eines hierzu korrelierenden Wertes außerhalb dieses Einlernbereichs, wird kein diesem Anschlag zugeordneter Schutzstop gesetzt. Jedoch können andere Maßnahmen getroffen werden oder andere nicht diesem Anschlag zugeordnete Schutzstops oder von einem Nutzer wirkungslos schaltbare Schutzstops gesetzt werden.

Zur Bestimmung und weiteren Ausgestaltungen des Einlernbereiches wird auf die Beschreibung der DE 101 59 136 verwiesen.

In einer alternativen Weiterbildung der Erfindung wird im Falle eines Korrekturbedürfnisses der Position eines der Schutzstops der Fehler der Position dieses Schutzstops ermittelt. Nachfolgend oder zeitgleich wird die gewünschte Position dieses Schutzstops bestimmt und dieser korrigiert. In Abhängigkeit von dieser aktuellen Position wird die Position des anderen, dem anderen Anschlag zugeordneten Schutzstops bestimmt und korrigiert. In dieser Erfindungsvariante werden die Positionen beider Schutzstops im Verhältnis zueinander korrigiert. Dieses Verhältnis ist vorzugsweise eine feste Distanz oder in einer alternativen Ausgestaltung der Erfindung eine Mindestdistanz, die auch überschritten werden kann, um beispielsweise ein Setzungsverhalten des Verstellsystems mit zu berücksichtigen. Diese Mindestdistanz zwischen dem ersten Schutzstop und dem zweiten Schutzstop ist dabei vorgebbar oder ermittelbar. Die Ermittlung kann beispielsweise in Abhängigkeit von der Messung eines Normierungslaufes erfolgen.

Für die Verwendung einer virtuellen Achse wird vorzugsweise die Verstellposition einem Positionswert zugeordnet, der zur Zuordnung in Abhängigkeit von der Verstellung der Verstellvorrichtung verändert wird. Zwar ist diese Zuordnung nicht für die Anwendung einer virtuellen Achse beschränkt, für diese jedoch besonders vorteilhaft einsetzbar. Der Positionswert wird korrigiert, wenn eine Verschiebung des Positionswertes zur aktuellen Verstellposition ermittelt wird. Zur Korrektur wird der aktuelle Positionswert relativ positionsverändert zur Position zumindest eines Schutzstops auf diese aktuelle Verstellposition gesetzt. Die Schutzstops können dagegen ortsfest verbleiben. Hierzu sind die Schutzstopositionen vorteilhafterweise als für die Korrektur unveränderliche Werte vorzugsweise nichtflüchtig gespeichert. Zur Korrektur wird der aktuelle Positionswert auf diese aktuelle Verstellposition gesetzt, wobei relativ zu den voneinander abhängigen Positionen des ersten Schutzstops und des zweiten Schutzstops der Positionswert verändert wird.

Zur Zuordnung der Verstellposition zu dem Positionswert ist der Positionswert in einer vorteilhaften Ausgestaltung der Erfindung ein Zählwert, der in Abhängigkeit von der Antriebsbewegung eines Antriebs der Verstelleinrichtung inkrementiert oder dekrementiert wird. Hierzu können beispielsweise Hallsensoren oder "Ripple-Count" Messverfahren verwendet werden.

Um den Positionswert zu korrigieren, wird in Abhängigkeit von einer zur Blockierung der Verstellbewegung zugehörigen Verstellposition der aktuelle Positionswert errechnet oder aus einem Register eines Speichers ausgelesen, so daß der erste Schutzstop im Bereich des ersten mechanischen Anschlages und der zweite Schutzstop im Bereich des zweiten mechanischen Anschlages positioniert ist.

In einer vorteilhaften Ausgestaltung der Erfindung wird zumindest einer der Schutzstops deaktiviert, wenn eine Verschiebung des Positionswertes zur aktuellen mechanischen Verstellposition im Verstellweg ermittelt wird. Die Verschiebung der virtuellen Positionsachse zum Verstellweg wird vorzugsweise in Abhängigkeit von einer zur Blockierung der Verstellbewegung zugehörigen Verstellposition errechnet, so daß der erste Schutzstop im Bereich des ersten mechanischen Anschlages und der zweite Schutzstop im Bereich des zweiten mechanischen Anschlages positioniert ist. Vor einer derartigen Korrektur wird vorteilhafterweise zumindest einer der Schutzstops sofort deaktiviert, wenn eine Verschiebung der virtuellen Positionsachse zum Verstellweg ermittelt wird.

In einer vorteilhaften Weiterbildung der Erfindung ist dem ersten mechanischen Anschlag ein erster Einlernbereich und dem zweiten mechanischen Anschlag ein zweiter Einlernbereich zugeordnet. Zwischen dem ersten Einlernbereich und dem zweiten Einlernbereich ist ein Sperrbereich vorgesehen. Zumindest einer der Schutzstops wird deaktiviert, wenn innerhalb des Sperrbereiches eine Blockierung der Verstellbewegung bestimmt wird. Vorteilhafterweise sind auch die Bereichsgrenzen der Einlernbereiche als feste Positionen gespeichert und zu der jeweiligen Schutzstopposition in einer festen Relation.

Gemäß einem anderen Aspekt der Erfindung wird im Falle einer Detektion der mechanischen Blockierung ein durch eine Nutzeraktion wirkungslos schaltbarer Schutzstop gesetzt. Die mechanische Blockierung wird beispielsweise durch einen Stillstand der Antriebsachse des Verstellantriebes detektiert. Zur Detektion können neben dem zuvor angeführten Beispiel alle Sensierungen von Bewegungen, Kräften, Strömen oder dergleichen genutzt werden, die eine Unterscheidung zwischen einer Verstellbewegung und einer Blockierung ermöglichen. Im Falle dieser Detektion der mechanischen Blockierung wird ein Schutzstop in den Verstellweg gesetzt, der örtlich zu der Blockierung positioniert ist. Dieser Schutzstop weist die Funktionalität auf, daß derselbe durch eine Nutzeraktion wirkungslos geschalten werden kann. Die Nutzeraktion ist dabei ein Einwirken, beispielsweise ein Betätigen einer Bedienvorrichtung, der Person, die die Verstellvorrichtung in der Position verstellen möchte. Dies ist beispielsweise der Fahrer eines Kraftfahrzeugs, der den Kraftfahrzeugsitz in Sitzlängsrichtung verstellen möchte.

Wird der Schutzstop durch den Nutzer wirkungslos geschalten, hat dies zur Folge, das die Wirkung des Schutzstops zumindest temporär aufgehoben wird. Insbesondere wird nach einem durch den Schutzstop erfolgtem Stoppen der Verstellbewegung ein Sperren für ein weiteres Verfahren in dieselbe Verstellrichtung aufgehoben, wenn der Schutzstop durch den Nutzer wirkungslos geschalten wird. Neben dem einfachen Ein- und Ausschalten der Wirkung des Schutzstops zum Schutz der Mechanik, also insbesondere dem Sperren der Verstellbewegung in die Blockierung, kann auch ein Umschalten verschiedener Funktionsmodi des Schutzstops erfolgen, die jedoch die Sperrwirkung zumindest temporär aufheben und somit den Schutzstop in seiner Sperrwirkung in Richtung der Blockierung wirkungslos schalten. Dies kann beispielsweise als "Überdrücken" ausgeführt sein, indem eine erneute Betätigung durch den Nutzer in derselben Verstellrichtung, also in Richtung der Blockierung, nach dem Schutzstop-bedingten Stoppen zu einer erneuten Verstellbewegung führt, die beispielsweise durch die Blockierung begrenzt wird.

Dieser wirkungslos schaltbare Schutzstop wird durch einen von dieser Nutzeraktion unabhängigen Schutzstop ersetzt, wenn eine von der Verstellbewegung abhängige Bedingung erfüllt ist. Der von der Nutzeraktion unabhängige Schutzstop verhindert die Aufhebung der Sperrung durch den Nutzer, so daß ein durch eine Nutzeraktion bedingtes Verfahren der Verstelleinrichtung in die Blockierung nicht möglich ist. Demzufolge unterscheiden sich die zuvor ausgeführten Schutzstops im Funktionsmodus bezüglich der zugelassenen beziehungsweise nicht zugelassenen Nutzeraktion.

Das Verfahren ist vorteilhaft anwendbar zur Steuerung einer Verstelleinrichtung eines Kraftfahrzeuges, insbesondere einer Kraftfahrzeugsitzverstellung mit einen Verstellweg zwischen einem ersten mechanischen Anschlag und einem zweiten mechanischen Anschlag. Weiterhin ist es notwendig, daß eine Verstellposition innerhalb des Verstellweges bestimmt wird, um die Schutzstops dieser Verstellposition zuzuordnen und eine örtliche Abhängigkeit der Wirkungen dieser Schutzstops zu erreichen.

Das Ersetzen des schaltbaren Schutzstops durch den unabhängigen Schutzstop ist an die Bedingung geknüpft, die von der Verstellbewegung abhängig ist. Diese Bedingungen sind insbesondere Plausibilitätsprüfungen, die eine ungewünschte Einschränkung des Verfahrweges minimieren sollen. Um also eine möglichst weitreichende Verstellbewegung zu ermöglichen, wird die Erfüllung dieser Bedingung, die auch aus mehreren kombinierten Bedingungen zusammengesetzt sein kann, insbesondere mittels eines Algorithmus überprüft.

Die verschiedenen Arten der Bedingungen gliedern sich entsprechend den Unterauf gaben der Erfindung in mehrere Hauptvarianten, die vorteilhafterweise als Bestandteile der Bedingung miteinander kombiniert werden können.

Die Erfindung soll ermöglichen die Bedingung an für die Verstellbewegung besonders charakteristischen Verstellpositionen zu überprüfen. Hierzu ist in einer weiterbildenden Hauptvariante der Erfindung die Bedingung von einer Verstellbewegung in einen der Anschläge abhängig. Hierbei weisen die Anschläge sowohl eine signifikante Verstellposition, wobei die Verstellmöglichkeit in eine Richtung begrenzt wird, als auch eine signifikante Verstellcharakteristik aufgrund einer Abbremsung der Verstellbewegung bei einem Verfahren in die Anschläge auf.

Um einen maximalen Verstellweg zu erhalten, werden vorzugsweise die Positionen der den Verstellweg begrenzenden Anschläge ermittelt. Insbesondere, wenn diese nur anhand ihrer relativen Position zueinander erkannt werden können, wird in einer vorteilhaften Weiterbildung dieser Hauptvariante als Bedingung die Position des der Blockierung im Verstellweg entgegengesetzten Anschlags ermittelt. Sind beide Positionen bekannt, kann aus örtlichen Abhängigkeiten, beispielsweise aus der relativen Position zueinander oder der Position der Blockierungen zu bestimmten Einlernbereichen, auf die Blockierung an beiden Anschläge geschlossen werden. Die Bedingung zum Ersetzen des wirkungslos schaltbaren Schutzstops durch den von der Nutzeraktion unabhängigen Schutzstop ist in diesem Fall erfüllt. Die Reihenfolge, ob zuerst der entgegengesetzte Anschlag oder der der aktuellen Blockierung zugeordnete Anschlag mit einem unabhängigen Schutzstop geschützt wird, ist dabei beliebig.

Alternativ oder in Kombination zur Auswertung der örtlichen Abhängigkeiten der Blockierung kann auch die Verstellcharakteristik an einer Blockierung für die Bedingung genutzt werden. Hierzu wird in einer vorteilhaften Variante der Erfindung für die Blockierung der Verlauf einer Verstellgröße ausgewertet. Die Verstellgröße ist beispielsweise die Momentangeschwindigkeit, die Beschleunigung oder ein Regelparameter einer Geschwindigkeitsregelung deren Verlauf über die Zeit oder über den Weg ausgewertet wird. Vorteilhafterweise wird als Bedingung dieser Verlauf einem für einen Anschlag charakteristischen Verlauf der Verstellgröße zugeordnet. Diese Zuordnung kann beispielsweise mittels Faltung oder einem anderen mathematischen Algorithmus gelöst werden, der ein Vergleichsergebnis des Vergleichs mindestens zweier Verläufe ausgibt.

Alternativ zu dieser Variante kann unter Verwendung zusätzlicher Hardware als Bedingung die Blockierung an einem der Anschläge sensiert wird. Hierzu weist der Anschlag oder das zu bewegende Teil der Verstelleinrichtung einen Sensor auf, der die Anschlagskräfte detektiert. Hindernisse im Verstellweg können dagegen nicht auf diesen Sensor wirken.

Zudem soll sichergestellt werden, daß sich nicht Abweichungen von der optimalen Verstellung auf das Ergebnis dieser Bedingungsprüfung auswirken. In einer vorteilhaften weiteren Variante der Erfindung wird demzufolge für die Plausibilitätsprüfung der Bedingung die Ungenauigkeit der bestimmten Verstellposition ermittelt. Die Ungenauigkeit kann durch unterschiedliche äußere oder systemimmanente Einflüsse verursacht werden. Diese Ungenauigkeit kann bereits aufgrund von Fehlerwahrscheinlichkeiten die Gültigkeit des Ergebnisses der Bedingung maßgeblich beeinflussen. Vorteilhafterweise darf als Bedingung die Ungenauigkeit einen Maximalwert nicht überschreiten. Dieser Maximalwert stellt sicher, daß die Verfahrwegseinschränkung auf ein noch tolerierbares Maß begrenzt wird.

In einer vorteilhaften Ausgestaltung der Erfindung wird als ein Meßwert für die Ungenauigkeit eine Anzahl der Verstellungen ermittelt. Hierzu sind beispielsweise die Anzahl der Betätigungen durch den Nutzer zählbar. Aufgrund der durch das Verstellsystem verursachten Fehler der Verstellposition bei einem Anfahren oder Abbremsen der Verstellbewegung kann diese Zählzahl als Maß für wahrscheinliche Ungenauigkeiten genutzt werden. Vorteilhafterweise wird als Bedingung das Überschreiten der Anzahl der Verstellungen über einen Maximalwert überprüft. Wird dieser Maximalwert überschritten, ist die Bedingung nicht erfüllt, so daß demzufolge der wirkungslos schaltbare Schutzstop nicht durch einen von der Nutzeraktion unabhängigen Schutzstop ersetzt wird.

Weiterhin ist besonders vorteilhaft, daß die Ungenauigkeit durch eine Anzahl der Richtungswechsel der Verstellung ermittelt wird. Aufgrund von elastischen Verformungen der Antriebsmechanik der Verstelleinrichtung wird bei einem Richtungswechsel der Verstellung diese Antriebmechanik von der einen in die entgegengesetzte Richtung vorgespannt. Diese zusätzlichen Federwege führen zu signifikanten Fehlern in der Bestimmung der Verstellposition, die wiederum Fehler in der ortsabhängigen Positionierung der unabhängigen Schutzstops verursachen können. Folglich wird vorteilhafterweise ausgewertet, daß als Bedingung die Anzahl der Richtungswechsel der Verstellung einen Maximalwert nicht überschreitet.

Weiterhin können Fehler der Auswertung selbst, die durch die Elektronik verursacht werden, zu einer fehlerhaften Positionierung der Schutzstop und folglich zu einer unerwünschten Verfahrwegseinschränkung führen. In einer vorteilhaften Ausgestaltung der Erfindung werden diese Fehler der Elektronik als Bedingung mit überprüft, indem insbesondere die Ungenauigkeit durch die Bestimmung eines detektierten Einbruchs der Versorgungsspannung der Verstelleinrichtung ermittelt wird. Hierzu wird vorteilhafterweise als Bedingung der Einbruch der Versorgungsspannung nicht während einer Verstellung detektiert. Ein derartiger Einbruch der Versorgungsspannung könnte beispielsweise ein fehlerhaftes Erfassen der Verstellposition durch einen Nachlauf der Verstelleinrichtung während des Einbruchs verursachen. Weitere Fehler der Elektronik sind beispielsweise eine fehlerhafte Speicherung der Verstellposition oder ein Fehler im Programmablauf einer Recheneinheit.

Ist eine Normierung in den Anschlägen unerwünscht, weil die durch die Normierung in den Anschlägen verursachte mechanische Belastung des Verstellsystems weiter reduziert werden soll, werden vorteilhafterweise einzeln oder in Kombination mit den Anschlägen weitere von der Verstellbewegung abhängige Bedingungen ausgewertet. In einer weiteren Hauptvariante der Erfindung wird als Bedingung eine von einer Blockierung unabhängige Verstellposition im Verstellweg zwischen den Anschlägen sensiert. Hierzu müssen Sensoren vorgesehen sein, die eine eineindeutige Verstellposition innerhalb des Verstellweges zur Normierung detektieren. Diese Detektion wird zur Normierung der bestimmten Verstellposition genutzt. Zum anderen kann als Bedingung eine Maximalabweichung zwischen der bestimmten Verstellposition und der Normierungsposition genutzt werden.

Stehen weitere Funktionen, insbesondere zum Schutz der Kraftfahrzeuginsassen zur Verfügung, wird in einer vorteilhaften weiteren Variante der Erfindung mittels eines Einklemmdetektors ein Einklemmen von Gegenständen oder Personen durch die Verstelleinrichtung des Kraftfahrzeugs detektiert. Diese Detektion eines Einklemmfalls wird vorteilhafterweise dazu genutzt, die Gültigkeit der Erkennung der Blockierung an einem der Anschläge mittels der Bedingung zu überprüfen. Hierzu ist als Bedingung vor dem Ersetzen kein Einklemmen detektiert worden.

Kann die Verstelleinrichtung verstellt werden, so daß kein Gegenstand oder Körper eines Fahrzeuginsassen sich im Verstellweg befindet wird dies vorteilhafterweise zusätzlich ausgewertet. Gemäß einer weiteren Variante der Erfindung wird die Verstelleinrichtung in unterschiedlichen Betriebsmodi betrieben. Dabei ist die Verstelleinrichtung in einem Normierungsmodus betreibbar, der beispielsweise in einer Werkstatt oder während eines verriegelten Zustandes des Kraftfahrzeuges nutzbar ist. Dabei erfolgt als von diesen Verstellbedingungen abhängige Bedingung in diesem Normierungsmodus die Blockierung an den Anschlägen. Eine Blockierung an einem anderen Gegenstand kann in diesem Normierungsmodus ausgeschlossen werden.

Zum Ersetzen des Schutzstops soll in möglichst einfacher Weise der Benutzerwille ermittelt werden, ob der Schutzstop wirkungslos geschalten werden soll und ob folglich einer Verstellung über diesen Schutzstop hinaus erfolgen soll. Gemäß einer Weiterbildung der Erfindung wird der Nutzerwille anhand der Betätigung einer Bedieneinrichtung ermittelt. Vorteilhafterweise erfolgt die mit dem Benutzerwillen korrespondierende Nutzeraktion durch die manuelle Betätigung einer Bedienvorrichtung zur Ansteuerung der Verstelleinrichtung. Diese Bedienvorrichtung besteht beispielsweise aus Schaltern, mit denen sich die Verstellungen der einzelnen Verstellwege einer Sitzverstellung ansteuern lassen. Wird mittels dieser Nutzeraktion die Bedienvorrichtung erneut betätigt wird die Verstelleinrichtung über den Schutzstop hinaus verfahren. Ist die Blockierung zuvor beispielsweise durch eine Bananenkiste verursacht worden, die zum Zeitpunkt der Nutzeraktion aus dem Verstellweg bereits wieder entfernt wurde, kann durch die Nutzeraktion die Verstellung über diesen Schutzstop hinaus, im Idealfall bis zum begrenzenden Anschlag erfolgen. In diesem Fall kann der bisherige wirkungslos schaltbare Schutzstop deaktiviert oder gelöscht werden, da die Annahme der Blockierung durch die Bananenkiste nicht mehr zutrifft. Die Löschung oder Deaktivierung erfolgt beispielsweise in Abhängigkeit von der Nutzeraktion.

Vorteilhafterweise wird die Anzahl der Betätigungsereignisse überprüft. Vorzugsweise erfolgt die Nutzeraktion durch die erneute manuelle Betätigung des der Verstellbewegungsrichtung zugeordneten Betätigungselementes der Bedienvorrichtung nach dem Setzen des wirkungslos schaltbaren Schutzstops. Ist der Nutzerwille ermittelt, daß der gesetzte wirkungslos schaltbare Schutzstop überfahren werden soll, ist unter Analyse der Nutzeraktion ein Verfahren über den Schutzstop hinaus ohne oder alternativ mit einem Stoppen an der gewünschten Position möglich. Insofern kann auf den Nutzerwillen geschlossen werden, daß nach einem Schutzstop-bedingten Stoppen der Verstellbewegung eine Fortsetzung der Verstellung in Richtung der Blockierung durch den Nutzer gewünscht ist. Beispielsweise kann eine Zusatztaste vorgesehen sein, die ein Verfahren ohne stoppen an dem wirkungslos schaltbaren Schutzstop zuläßt.

Soll eine versehentliche erneute Betätigung oder eine falsche Betätigung ein Verfahren der Verstelleinrichtung in die detektierte Blockierung ausschließen, erfolgt in einer vorteilhaften Weiterbildung der Erfindung die Nutzeraktion durch die manuelle Betätigung eines Freigabebetätigungselementes. Dieses Freigabebetätigungselement kann beispielsweise ein zusätzlicher Schalter oder eine kombinierte Betätigung mehrerer Taster sein, die in Doppelfunktion mindestens eine weitere Ansteuerung ermöglichen. Dieses Freigabebetätigungselement wird beispielsweise vor einem Verfahren über den Schutzstop hinaus als Nutzeraktion betätigt und die Sperrung in Richtung der detektierten Blockierung aufgehoben.

Um den Nutzerwillen beeinflussen zu können ist in einer vorteilhaften Weiterbildung der Erfindung vorgesehen, daß die Nutzeraktion interaktiv mittels einer Eingabeeinheit und einer Ausgabeeinheit zwischen der Verstelleinrichtung und dem Nutzer erfolgt. Hierdurch können dem Nutzer Informationen über den Zustand des Verstellsystems übermittelt werden und der Nutzer kann beispielsweise Hindernisse im Verfahrweg beseitigen, um eine Neunormierung an den Anschlägen zu ermöglichen.

Da ein Schutzstop zumindest eine Zuordnung zu einer Verstellposition und eine weitere Zuordnung zu einer gewünschten Wirkung aufweist, sind unterschiedliche Varianten für das Ersetzen des wirkungslos schaltbaren Schutzstops durch den von der Nutzeraktion unabhängigen Schutzstop möglich. Beiden im folgenden dargelegten Varianten der Erfindung ist gemein, daß maximal einer der beiden Schutzstops aktiv ist. Es können alternativ auch beide Schutzstops aktiv sein, wobei die Verstellenergie bereits mit dem Erreichen des einen der beiden aktiven Schutzstops reduziert wird.

Eine Variante dieser Weiterbildung der Erfindung sieht vor, daß zur Ersetzung des wirkungslos schaltbaren Schutzstops durch den von der Nutzeraktion unabhängigen Schutzstop dieser Schutzstop von als wirkungslos schaltbarer zum von der Nutzeraktion unabhängigen Schutzstop verändert wird. Eine Veränderung des Verstellposition ist dagegen nicht zwingend notwendig, wenn eine absolute Normierung nicht notwendig ist. Eine Normierung kann jedoch vorteilhaft sein, um die Positionen von Memory-Position zu der Verstellposition vereinfacht zuzuordnen.

In einer alternativen Vorzugsvariante der Erfindung wird zur Ersetzung des wirkungslos schaltbaren Schutzstops durch den von der Nutzeraktion unabhängigen Schutzstop der wirkungslos schaltbare Schutzstop gelöscht. Dieser Schutzstop wird aufgrund der Ersetzung für einen Schutz vor dem Verfahren in den Anschlag nicht mehr benötigt, da der von der Nutzeraktion unabhängige Schutzstop aktiviert wird. Diese unabhängige Schutzstop kann in einem festen Abstand von dem Anschlag positioniert werden, da die Verstellposition zu diesem Anschlag neu ausgerichtet wird.

Gemäß einer vorteilhaften Weiterbildung der Erfindung wird mit dem Setzen eines ersten einer ersten Blockierung zugeordneten Schutzstops aufgrund dieser Detektion der mechanischen Blockierung ein zweiter Schutzstop gesetzt, der dem der Blockierung im Verstellweg entgegengesetzten Anschlag zugeordnet ist. Bei Erreichen dieses zweiten Schutzstops werden beide Schutzstops durch von der Nutzeraktion unabhängige Schutzstops ersetzt. Dies ist insbesondere deshalb vorteilhaft, da ein Schutzstop bereits dann gesetzt werden kann, ohne daß vorher eine Blockierung zu einer Belastung der Verstelleinrichtung führt. Zumindest mit einer gewissen Wahrscheinlichkeit kann dieser Schutzstop ohne eine vorherige Blockierung erreicht werden, so daß das Verstellsystem erkennt, daß ein ausreichender Verfahrweg zur Verfügung steht. Bei Nicht-Erreichen dieses zweiten Schutzstops im Falle einer erneuten Blockierung im Verstellweg wird erneut ein zweiter Schutzstop der aktuellen Blockierung im Verstellweg gegenüberliegend gesetzt. Wiederum besteht eine gewisse Wahrscheinlichkeit des Erreichens dieses Schutzstops, der wiederum eine zusätzliche, das Verstellsystem belastende Blockierung verhindern würde. Vorzugsweise ist der gesetzte Schutzstop ein durch eine Nutzeraktion wirkungslos schaltbarer Schutzstop, so daß temporäre Hindernisse nicht zu einer ständigen Blockierung an dieser Schutzstopstelle führen. Dabei ist vorzugsweise die von der Verstellbewegung abhängige Bedingung das Erreichen des zweiten Schutzstops. Vorteilhafterweise wird der der aktuellen Blockierung im Verstellweg gegenüberliegende Schutzstop mit einer Mindestdistanz entfernt gesetzt. Die vorgebbare oder ermittelbare Mindestdistanz erstreckt sich zwischen der aktuellen Blockierung oder dem gesetzten ersten Schutzstop und dem gegenüberliegenden Schutzstop. Dabei ist die Mindestdistanz von einem gewünschten Verfahrweg abhängig.

Die Mindestdistanz kann beispielsweise in einer Urnormierung bestimmt werden oder für einen Kraftfahrzeugsitztyp gespeichert werden. Die Mindestdistanz wird hierzu aus einem Speicher ausgelesen. Die Mindestdistanz ist beispielsweise zu Beginn als Erfahrungswert vorgegeben und kann beispielsweise 80 Prozent des gewünschten Verstellweges betragen oder die Mindestdistanz wird aus ungestörten Verstellungen in die beiden Anschläge während der Bandendmontage des Kraftfahrzeugs aus der Entfernung der beiden Anschläge berechnet. Wenn die Entfernung gleich oder kleiner ist als die Mindestdistanz, werden die wirkungslos schaltbaren Schutzstops nicht ersetzt. Die wirkungslos schaltbaren Schutzstops können jedoch gelöscht, insbesondere aber auch verschoben oder deaktiviert werden.

Um einen Überlauf eines Positionszählers zu vermeiden und um die Sitzmemorypositionen vereinfacht der aktuellen Verstellposition zuzuordnen, wird in einer besonders vorteilhaften Weiterbildung der Erfindung die Verstellposition einem Positionswert zugeordnet. Dieser Positionswert wird zur Zuordnung in Abhängigkeit von der Verstellung der Verstellvorrichtung verändert, indem insbesondere Umdrehungen oder Winkelteile der Umdrehungen der Antriebswelle durch ein Magnet-Hallsystem gezählt werden. Da diese Zuordnung, wie bereits zuvor beispielhaft dargelegt, fehleranfällig ist, wird vorzugsweise der Positionswert korrigiert, wenn eine Verschiebung des Positionswertes zur aktuellen Verstellposition ermittelt wird. Eine derartige Verschiebung wird beispielsweise an einem Anschlag bestimmt, wenn der Positionswert nicht mit der Verstellposition des Anschlags übereinstimmen. Vorzugsweise wird dabei zur Korrektur der aktuelle Positionswert auf diese aktuelle Verstellposition gesetzt, so daß die mechanische Verstellachse zur virtuellen Positionswertachse ausgerichtet wird.

Eine bevorzugte Ausgestaltung der Weiterbildung der Erfindung sieht vor, daß der Positionswert korrigiert wird, wenn die von der Verstellbewegung abhängige Bedingung erfüllt ist. So kann die Wahrscheinlichkeit reduziert werden, daß durch Positionsfehler oder eine fehlerhafte Zuordnung der Blockierung zu einem Anschlag der Positionswert zu einer fehlerhaften Verstellposition ausgerichtet wird und diese Achsen weiterhin zueinander verschoben sind.

In einer weiteren vorteilhaften Ausgestaltung der Erfindung wird zusätzlich zu dem Schutzstop ein diesem Schutzstop zugeordneter Einlernbereich bestimmt. Die Bereichsgrenzen dieses Einlernbereiches werden in Abhängigkeit von der Position desselben Schutzstops oder Blockierung gesetzt. Im Falle eines Korrekturbedürfnisses der Position desselben Schutzstops wird das Setzen eines neuen Schutzstops zugelassen, wenn ein insbesondere dem neuen Schutzstop oder der Blockierung zugeordneter Positionswert innerhalb dieses Einlernbereiches liegt. Vorzugsweise werden die Bereichsgrenzen des Einlernbereichs gesetzt, wenn der Einlernbereich dem von der Nutzeraktion unabhängigen Schutzstop zugeordnet wird.

Diese Zuordnung zwischen Schutzstopp und Einlernbereich dient einer Wirkbeziehung zwischen diesem Schutzstop und dem Einlernbereich. Der Einlernbereich steuert die örtlichen Randbedingungen für ein Einlernen eines neuen Schutzstops derart, daß innerhalb dieses Einlernbereichs ein Setzen eines Schutzstops zugelassen wird, wobei dieser neu gesetzte Schutzstop vorzugsweise dem jeweiligen Anschlag zugeordnet ist und somit in Richtung auf den Anschlag eine Reduktion der Verstellenergie ermöglicht. Die Zulassung des Setzens eines Schutzstops besagt, daß ein Setzen eines diesbezüglichen neuen Schutzstops in diesem Bereich noch von weiteren Kriterien abhängig sein kann, jedoch örtlich zwischen den Bereichsgrenzen dieses Einlernbereichs unter Ausschluß negativer weiterer Kriterien erfolgt.

Ein neuer Schutzstop wird dann gesetzt, wenn ein Korrekturbedürfnis des Wertes des bisherigen Schutzstops vorliegt, oder noch kein diesem Anschlag zugeordneter Schutzstop bestimmt wurde. Beispielsweise ist der Zählwert gegenüber der realen Position des mechanischen Anschlages wesentlich verschoben, so daß die bisherige Position des Schutzstops keine ausreichende Reduktion der Verstellenergie gewährleistet, bevor das verstellte Teil den Anschlag berührt. Handelt es sich um erwartete Verschiebungen innerhalb der Einlernbereichsgrenzen wird wie zuvor beschrieben verfahren. Liegt der Positionswert des Schutzstops, des Anschlages oder eines hierzu korrelierenden Wertes außerhalb dieses Einlernbereichs, wird vorzugsweise vorläufig ein wirkungslos schaltbarer Schutzstop gesetzt.

Zum Bestimmen des Einlernbereiches werden die Bereichsgrenzen des Einlernbereiches in Abhängigkeit von einer Positionscharakteristik bestimmt. Insbesondere ist diese Positionscharakteristik die Position des zugehörigen Anschlags selbst, so daß die Grenzen des Einlernbereiches von dieser Position des Anschlages leicht und toleranzarm zu berechnen sind. Alternativ können auch andere Positionscharakteristika, wie beispielsweise eine Detektion einer bestimmten Verstellposition mittels Positionsdetektor genutzt werden, um die Bereichsgrenzen zu berechnen. Die Weite des Einlembereiches, beispielsweise 20 mm, wird in Abhängigkeit von der Position des Anschlages derart berechnet, daß im Normalbetrieb der Kraftfahrzeugverstelleinrichtung eine Verschiebung zwischen ermittelter Position und realer Verstellposition im allgemeinen kleiner ist als die Weite des Einlembereichs. Auf größere, unerwartete Verschiebungen kann das Steuerungsverfahren dann abweichend reagieren.

In einer vorteilhaften Ausgestaltung der Erfindung wird zur Bestimmung des Einlernbereiches eine Blockierung der Verstellbewegung vorzugsweise an einem der Anschläge bestimmt, und die Bereichsgrenzen des Einlernbereiches werden in Abhängigkeit von der zur Blockierung der Verstellbewegung zugehörigen Verstellposition errechnet. Alternativ kann zur Positionsberechnung auch ein Schutzstop verwendet werden. Vorteilhafterweise werden die Bereichsgrenzen derart berechnet, daß die Blockierungsposition auf oder innerhalb der Bereichsgrenzen liegt.

Eine vorteilhafte Weiterbildung der Erfindung sieht vor, daß dem ersten mechanischen Anschlag ein erster Einlernbereich und dem zweiten mechanischen Anschlag ein zweiter Einlernbereich zugeordnet ist, und zwischen dem ersten Einlernbereich und dem zweiten Einlernbereich ein Sperrbereich vorgesehen ist. Dieser Sperrbereich dient wiederum als örtliche von der Verstellbewegung abhängige Bedingung für das Setzen eines von der Nutzeraktion unabhängigen Schutzstops, derart, daß im Sperrbereich das Setzen eines von der Nutzeraktion unabhängigen, dem mechanischen Anschlag zugeordneten Schutzstops verhindert wird.

Gemäß einer vorteilhaften Ausgestaltung dieser Weiterbildung der Erfindung wird zumindest einer der gesetzten Schutzstops, die sowohl von der Nutzeraktion schaltbare, als auch von der Nutzeraktion unabhängige Schutzstops sein können, deaktiviert, wenn innerhalb des Sperrbereiches eine Blockierung der Verstellbewegung bestimmt wird. Die Deaktivierung bewirkt, daß der bisherige Schutzstop in Richtung auf den zugeordneten mechanischen Anschlag überfahren werden kann, die Verstellenergie also nicht automatisch reduziert wird. Wird jedoch später nachfolgend wiederum eine Blockierung innerhalb des Einlernbereiches erkannt, kann der Schutzstop als wirkungslos schaltbarer Schutzstop wieder aktiviert und auch neu positioniert werden.

Wenn eine Verstellposition außerhalb der bisherigen Einlernbereiche und des Sperrbereichs bestimmt wird, werden in einer vorteilhaften Weiterbildung der Erfindung alle Einlernbereiche und gesetzte Schutzstops deaktiviert. Dies bewirkt, daß das Setzen eines neuen Schutzstops, der einem mechanischen Anschlag zugeordnet wird, örtlich unabhängig ist, da keine Einlernbereiche aktiv sind. Wird eine Blockierung detektiert, wird zumindest ein wirkungslos schaltbarer Schutzstop gesetzt und der zugehörige Einlernbereich in einer Recheneinheit berechnet und beide nichtflüchtig abgespeichert.

In einer vorteilhaften Ausgestaltung der Erfindung wird die Verstellgeschwindigkeit zumindest innerhalb der Einlernbereiche reduziert. Sind keine Schutzstops gesetzt, erfolgt mit einer hohen Wahrscheinlichkeit der Blockierungszustand des Verstellsystems an einem der Anschläge, was eine hohe mechanische Belastung des Verstellsystems verursacht. Um diese zu reduzieren, wird auf den Anschlag ausgeübte Kraft durch die Geschwindigkeitsreduktion wesentlich verringert.

Wie beschrieben weist in dem Verfahren die Verstelleinrichtung mindestens einen Verstellweg zwischen einem ersten mechanischen Anschlag und einem zweiten mechanischen Anschlag auf. Eine Verstellposition wird innerhalb des Verstellweges bestimmt. Die Bestimmung der Verstellposition erfolgt beispielsweise mittels Zählen von Impulsen, die von einem Wegsensor erzeugt werden.

In einer vorgebbaren Entfernung zu einem der mechanischen Anschläge wird ein Schutzstop in den Verstellweg gesetzt, wobei der Schutzstop in Abhängigkeit von der bestimmten Verstellposition eine automatische Reduktion der Verstellenergie zum Stoppen der Verstellbewegung der Verstelleinrichtung im Bereich einer mechanischen Blockierung der Verstellbewegung ermöglicht. Die vorgebbare Entfernung ist dabei vorzugsweise in einem Speicher hinterlegt und kann am Speicherort im Bedarfsfalle aktualisiert werden.

Im Falle einer Detektion der mechanischen Blockierung wird ein erster durch eine Nutzeraktion wirkungslos schaltbarer Schutzstop gesetzt. Eine derartige Nutzeraktion ist beispielsweise ein Freischalten der Bewegung in Blockierungsrichtung, so daß die Wirkung des wirkungslos schaltbaren Schutzstops durch den Nutzer beispielsweise manuell aufgehoben werden kann.

Zeitgleich oder nachfolgend wird ein zweiter durch eine Nutzeraktion wirkungslos schaltbarer Schutzstop gesetzt, der dem der Blockierung im Verstellweg entgegengesetzten Anschlag zugeordnet und von dem ersten Schutzstop durch eine vorgebbare oder berechnete Mindestdistanz entfernt ist. Diese Mindestdistanz kann beispielsweise vorher definiert werden. Eine Überprüfung dieser Mindestdistanz ist während eines Normierungslaufes möglich, indem beide Endpunkte der Mindestdistanz anfahrbar sein müssen. Ist der Verfahrweg während der Überprüfung durch die Urnormierung kleiner als die Mindestdistanz, wird eine fehlerhafte Urnormierung erkannt, die zur Ansteuerung eines bestimmten Betriebsmodus oder zur Fehleranzeige genutzt werden kann. Ebenfalls kann die Mindestdistanz berechnet werden, indem aus dem Abstand der beiden Anschläge der maximale Verfahrweg gemessen wird und von diesem maximalen Verfahrweg die vorgebbaren Entfernungen, die dem jeweiligen Anschlag zugeordnet sind, subtrahiert werden.

Der erste und der zweite wirkungslos schaltbare Schutzstop sind jeweils durch einen von dieser Nutzeraktion unabhängigen Schutzstop ersetzbar, wenn die Verstellposition die Position des zweiten wirkungslos schaltbaren Schutzstops erreicht. Vorzugsweise werden die Schutzstops dann ersetzt, wenn zusätzlich eine von der Verstellung abhängige Bedingung erfüllt ist. Diese Bedingung ist beispielsweise, daß die Verstellbewegung zwischen den Positionen der beiden Schutzstops eine maximale Anzahl von Fahrtrichtungswechseln nicht überschreitet. Alternativ kann auch die Zeit zwischen den beiden Schutzstops einen Maximalwert nicht überschreiten. Ist die Bedingung nicht erfüllt, werden weiterhin wirkungslos schaltbare Schutzstops verwendet, die erst unter Eintritt der Bedingung ersetzt werden.

Im folgenden werden Verfahrzustände beschrieben, die bestimmte Reaktionen des Steuerungsalgorithmus des Steuerungsverfahrens erfordern. Die Reaktionen im Steuerungsverfahren sind vorteilhafte Ausgestaltungen der Erfindung.

In einem ersten Verfahrzustand sind keine oder nur geringe Fehler zwischen der mechanischen Position und der von einer Steuerungsvorrichtung bestimmten Position aufgetreten. Folglich lässt sich die Verstelleinrichtung über den Verfahrweg zwischen den beiden Schutzstops verstellen. An den Schutzstops wird die Verstellenergie, wie zuvor beschrieben automatisch reduziert, so daß das zu verstellende Teil vor dem jeweiligen Anschlag gestoppt wird. Die gespeicherten Memorypositionen sind aktiv, so daß die Verstelleinrichtung in diese Memorypositionen durch den Nutzer per Druck der entsprechenden Speichertaste automatisch verstellt werden kann. Die geringen Fehler können sich über die Verstelldauer jedoch zu einem signifikanten Fehler aufaddieren, so daß der Verfahrweg zunehmend eingeschränkt werden könnte. Um dem entgegenzuwirken wird, wenn eine Fehlerkorrekturbedingung erfüllt ist, zumindest einer der beiden Schutzstops deaktiviert und die aktuelle Position an einer folgenden Blockierung an einem der Anschläge neu ausgerichtet.

In einem zweiten Verfahrensstand liegt die bestimmte Verstellposition außerhalb des Bereiches zwischen den beiden Schutzstops, obwohl beide Schutzstops aktiv sein können. Dies kann beispielsweise durch einen Softwarefehler oder einen Sprung des Zählers aufgrund einer Bitmanipulation im Speicher verursacht werden. In diesem Fall wird zumindest einer der Schutzstops, vorzugsweise beide Schutzstops, deaktiviert oder gelöscht. Der Zählerstand der bestimmten Verstellposition wird auf einen Mittelwert in die Mitte des Verfahrweges als Default-Wert neu gesetzt. Die gespeicherten Memorypositionen werden deaktiviert oder ebenfalls auf diesen Mittelwert gesetzt bis einer der Anschläge erreicht wird, die Schutzstops entsprechend aktiviert werden, so daß die bisherigen Memorypositionen reaktiviert oder neue Memorypositionen aktiviert werden können.

Im dritten Verfahrenszustand wird eine Blockierung detektiert. Diese Blockierung kann zwischen den beiden Schutzstops oder, wenn diese nicht aktiviert sind außerhalb des Bereiches zwischen den beiden Schutzstops detektiert werden. Nachfolgend werden demzufolge die Schutzstops deaktiviert, wenn dies nicht bereits geschehen ist. Die bestimmte Verstellposition wird nun auf den diesem mechanischen Anschlag zugeordneten Wert gesetzt, so daß die Schutzstops gemäß der Urnormierung wieder im Positionsverhältnis zu den mechanischen Anschlägen sind. Nachfolgend werden der erste und der zweite wirkungslos schaltbare Schutzstop gesetzt. Ein Überfahren dieser Schutzstops ist in Richtung mit zunehmendem Abstand von dem jeweiligen Anschlag möglich. Wird einer dieser Schutzstops vom Nutzer wirkungslos geschalten und die Verstelleinrichtung in Richtung auf die Blockierung verfahren, wird der wirkungslos schaltbare Schutzstop deaktiviert, wenn eine Blockierung nicht an der vorherigen Stelle detektiert wird.

Die Memorypositionen verbleiben fortlaufend im Verhältnis zu den Positionen der Schutzstops. Diese Memorypositionen werden mit der Detektion einer Blockierung nicht verändert, sondern mit den Schutzstops zusammen zu der detektierten mechanischen Blockierung neu ausgerichtet.

Hinsichtlich weiterer Einzelheiten des Steuerungsverfahrens sei auf die DE 102 19 284 verwiesen. Weiterhin kann dieses Steuerungsverfahren durch Korrekturverfahren vorteilhaft ergänzt werden. So können die Zählimpulse nach Abschalten der Motorspannung entsprechend der ermittelten Richtung gewichtet werden. Auch ermittelte Spannungseinbrüche und das Nachlaufverhalten der Verstelleinrichtung können zur Korrektur ermittelt werden.

Im Folgenden wird die Erfindung anhand von Ausführungsbeispielen bezugnehmend auf zeichnerische Darstellungen näher erläutert.

Dabei zeigen
- Fig. 1: eine schematische Darstellung eines Verstellweges einer Verstelleinrichtung mit Positionsdaten zur Steuerung,
- Fig. 1a: eine schematische Darstellung von verschobenen Positionsdaten,
- Fig. 1b: eine schematische Darstellung von zwei verschobenen Schutzstops,
- Fig. 2: eine schematische Darstellung eines weiteren Verstellweges einer Verstelleinrichtung mit Positionsdaten zur Steuerung,
- Fig. 2a: eine schematische Darstellung von verschobenen Positionsdaten,
- Fig. 2b: eine schematische Darstellung von zwei verschobenen Schutzstops,
- Fig. 3a: einen ersten Teil eines schematischen Verfahrensablauf in Form eines Flußdiagramms, und
- Fig. 3b: einen zweiten Teil des schematischen Verfahrensablaufs.

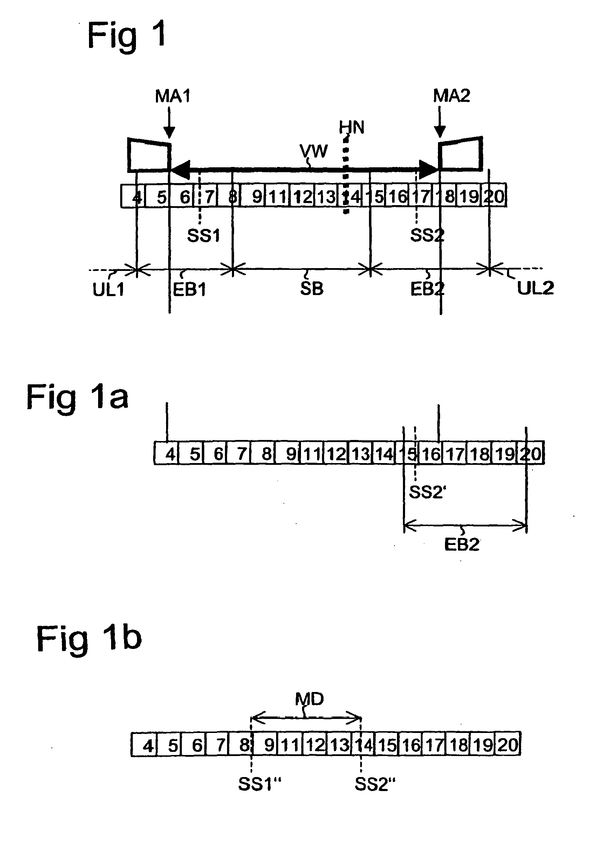

In Fig. 1 ist ein Verstellweg VW einer Kraftfahrzeugsitzverstellung schematisch dargestellt. Der mechanisch mögliche Verstellweg VW erstreckt sich von einem ersten mechanischen Anschlag MA1 (links) bis zu einem zweiten mechanischen Anschlag MA2 (rechts). Beispielsweise handelt es sich in dem vorliegenden Ausführungsbeispiel um eine Sitzlängsverstellung, eine Kopfstützenverstellung oder andere translatorische Verstellungen. In analoger Weise ist das Verfahren zur Steuerung auch auf rotatorische Verstellungen, wie die Verstellung der Neigung der Sitzrückenlehne anwendbar.

Die jeweils aktuelle Position des verstellbaren Teils der Verstelleinrichtung wird durch eine Auswertevorrichtung ermittelt, die in diesem Ausführungsbeispiel die Verstellbewegung mittels eines inkrementalen Gebers und eines zugeordneten Sensors auswertet. Der Verstellweg VW ist demzufolge in eine Vielzahl von Inkrementen unterteilt. In der Darstellung der Fig. 1 reicht der Verstellweg VW von dem Inkrement mit der Nummer 5 bis zu dem Inkrement mit der Nummer 18. Diese Darstellung ist zur Veranschaulichung stark vereinfacht. Um die Verstellposition hinreichend genau bestimmten zu können ist eine viel größere Anzahl von Inkrementen, beispielsweise einige zehntausend Inkremente notwendig. Die Erfindung ist dabei nicht auf die Verwendung von inkrementalen Meßsystemen beschränkt, vielmehr können auch alle anderen absoluten und relativen Positionsbestimmungen mit der Erfindung vorteilhaft kombiniert werden.

Um die mechanische Belastung des Verstellsystems zu reduzieren ist jedem mechanischen Anschlag MA1 oder MA2 ein Schutzstop SS1 beziehungsweise SS2, auch als Softstop bezeichnet, zugeordnet. Diese Schutzstops SS1, SS2 sind nicht in Richtung des jeweils zugehörigen mechanischen Anschlages MA1 beziehungsweise MA2 zu überfahren, ohne daß die Verstellenergie derart reduziert wird, daß weder der zugehörige mechanische Anschlag MA1 beziehungsweise MA2 noch das Getriebe oder der Motor der Verstelleinrichtung beschädigt wird. Hierzu wird der Motor vorzugsweise gebremst, so daß die Verstellbewegung vor oder an dem mechanischen Anschlag MA1 beziehungsweise MA2 zum Stillstand kommt, oder daß die verbleibenden auf den jeweiligen Anschlag MA1 beziehungsweise MA2 wirkenden Kräfte nur gering sind.

In der Gegenrichtung, mit zunehmender Distanz zu dem jeweiligen mechanischen Anschlag MA1 beziehungsweise MA2 sind die Schutzstop dagegen überfahrbar SS1 beziehungsweise SS2. Die Distanz der Schutzstops SS1, SS2 zu dem zugehörigen mechanischen Anschlag MA1 beziehungsweise MA2 ist entweder fest vorgebbar, in Fig. 1 beispielsweise ein Inkrement, oder von einer Steuerungsvorrichtung in Abhängigkeit von einer Kenngröße, beispielsweise dem Einsitzgewicht des Kraftfahrzeuginsassen oder dem Verstellweg VW, konfigurierbar.

Jedem mechanischen Anschlag MA1 oder MA2 ist ein Einlernbereich EB1 beziehungsweise EB2 zugeordnet. Dieser Einlernbereich EB1 beziehungsweise EB2 weist Bereichsgrenzen auf, die in Abhängigkeit von dem zugehörigen mechanischen Anschlag errechnet oder vorgegeben werden. In diesem Ausführungsbeispiel reicht der Einlernbereich EB1 des Anschlags MA1 vom Inkrement 4 bis zum Inkrement 8 und der Einlernbereich EB2 vom Inkrement 15 bis zum Inkrement 20. Die Bereichsgrenzen und damit die Breite des Einlernbereichs EB1, EB2 werden entweder fest vorgegeben und erfolgen in fester Positionierung zu dem jeweiligen mechanischen Anschlag MA1 beziehungsweise MA2, oder die Bereichsgrenzen werden beispielsweise in Abhängigkeit von gelemten Parametern oder ermittelten Kenngrößen oder Messgrößen neu konfiguriert.

Die Zählwerte der Auswertevorrichtung zur Positionsbestimmung des verstellbaren Teils der Verstelleinrichtung können durch Messfehler, Speicherfehler oder andere Programmfehler zu einer Verschiebung der ermittelten aktuellen Position zu der realen Position des verstellten Teils der Verstelleinrichtung führen. Dies ist exemplarisch in Fig. 1 a dargestellt. Der zuvor ermittelte Schutzstop SS2 befindet sich nach der Verschiebung folglich hinter dem mechanischen Anschlag MA2 (Inkrement 16), also außerhalb des Verstellweges VW. In einem solchen Fall wird zumindest der Schutzstop SS2 neu gesetzt oder aktualisiert (SS2').

Die Einlernbereiche EB1, EB2 dienen zur Beschränkung der Zulassung zum Setzen von Schutzstops SS1 beziehungsweise SS2, die jeweils einem Anschlag MA1, MA2 zugeordnet sind. Zur Auswertung sind mehrere Varianten denkbar. Eine erste Variante sieht vor, daß der neu zu setzende Schutzstop SS2' sich innerhalb des Einlernbereiches EB2 befinden muss, während eine zweite Variante vorsieht, daß ein neuer Schutzstop SS2' nur dann zugelassen wird, wenn sich die neu ermittelte Position des mechanischen Anschlages MA2 innerhalb der Bereichsgrenzen des Einlernbereiches EB2 befindet. Im Folgenden wird diese zweite Variante als Ausführungsbeispiel dargelegt.

Nach dem Einbau des Kraftfahrzeugsitzes in ein Kraftfahrzeug ist das Steuergerät zur Verfahrenssteuerung im Grundzustand. Der Positionszähler ist auf einem Initialwert, beispielsweise 12 vorgegeben. Ebenso sind alle Schutzstoppositionen und alle Grenzen der Einlernbereiche EB1, EB2 auf einen Initialwert eingestellt.

In einem ersten Schritt werden die Verstelleinrichtungen des Sitzes normiert, indem alle Verstellebenen einmal in beide mechanische Anschläge MA1, MA2 verfahren werden. Bei dem Erreichen des jeweiligen mechanischen Anschlages MA1 beziehungsweise MA2 wird die zugehörige Schutzstopposition SS1, SS2 berechnet und in einem EEPROM nichtflüchtig gespeichert. Mit beiderseitigem Abstand um die mechanischen Anschläge MA1, MA2 herum werden die Einlernbereiche EB1 und EB2 berechnet und nichtflüchtig gespeichert. Beispielsweise werden die Bereichsgrenzen hierzu mit einem Inkrementalwert oder einem Prozentwert von der Position des mechanischen Anschlages MA1, MA2 beabstandet.

Die gemessene Wegdifferenz zwischen den mechanischen Anschlägen dient zur Berechnung einer Mindestdistanz MD zwischen den Schutzstops SS1 und SS2, die wiederum für jede Verstellebene separat nichtflüchtig gespeichert werden. Zur Berechnung der Mindestdistanz wird eine vorgegebene Toleranz einbezogen, so daß die Mindestdistanz MD vorzugsweise mehr als achtzig Prozent des maximalen Verstellweges VW entspricht.

Ist die durch den Positionszähler bestimmte Position gegenüber der realen Position nur gering verschoben, kann dies dazu führen, daß ein mechanischer Anschlag MA2 durch ein Blockfahren innerhalb des Einlernbereiches EB2 detektiert wird. In diesem Fall wird der Schutzstop SS2 neu berechnet und als aktueller Schutzstop SS2', wie in Fig. 1a dargestellt, nichtflüchtig gespeichert. Der alte Schutzstop SS2 wird gleichzeitig oder folgend gelöscht oder überschrieben. Zusätzlich wird der bisherige Einlernbereich EB2 wie er in der Fig. 1a dargestellt ist ebenso verschoben bis die Bereichsgrenzen im selben Verhältnis zur Position des mechanischen Anschlages MA2 sind.

Wird innerhalb des Sperrbereiches SB eine Blockierung der Verstellung ermittelt, wird ein Setzen eines Schutzstops, der einem der mechanischen Anschläge MA1, MA2 zugeordnet ist, nicht zugelassen. Eine derartige Blockierung kann beispielsweise durch eine Champagner - Kiste oder ein anderes Hindernis HN verursacht sein. Dies sollte jedoch nicht zu einer Neunormierung der Sitzverstellung führen, da das Setzen eines Schutzstops SS2 nicht dem jeweiligen Anschlag MA2 zugeordnet wäre. Eine falsche Zuordnung würde dazu führen, daß der verfahrbare Weg des Verstellweges VW durch diesen "falschen" Schutzstop "SS2"' eingeschränkt werden würde.

Wird eine Blockierung aufgrund eines Hindernis HN oder eines Anschlages MA1, MA2 innerhalb des Sperrbereiches SB ermittelt, dies ist für die Steuerungsvorrichtung zunächst unklar, beziehungsweise nicht detektierbar, ob es sich lediglich um ein temporäres Hindernis, wie eine Champagner ― Kiste oder um einen mechanischen Anschlag MA1, MA2 handelt. Insbesondere kann eine signifikante Verschiebung des Positionszählers, beispielsweise durch einen Laufzeitfehler, zu einem unvermuteten Erreichen eines mechanischen Anschlages MA1, MA2 führen. Um diesen Konflikt zu lösen, werden beide bisherigen Schutzstops SS1 und SS2 gelöscht oder deaktiviert. Die bisherigen Einlernbereiche EB1, EB2 und die Mindestdistanz MD bleiben dagegen erhalten. Mit einer Fahrt in einen der mechanischen Anschläge MA1, MA2 werden die Schutzstops SS1, SS2 neu berechnet, wenn sich die Blockierungsposition innerhalb des Einlernbereiches EB1, EB2 befindet. In diesem Fall wird der zugehörige Einlernbereich EB1 beziehungsweise EB2 ebenfalls mit seinen Bereichsgrenzen neu berechnet.

Bewegt sich das verstellbare Teil der Verstelleinrichtung außerhalb des Verstellweges VW wird der Motor zumindest temporär gestoppt. Wird eine Position außerhalb der Einlernbereiche EB1, EB2 in Überläufen UL1, UL2 bestimmt, werden die Schutzstops SS1, SS2 und die Einlernbereiche EB1, EB2 gelöscht oder deaktiviert. Die gespeicherte Mindestdistanz MD dagegen bleibt erhalten. Wird bei einer erneuten Verstellung durch eine entsprechende Ansteuerung eine Blockierung erkannt, wird der entsprechende Schutzstop SS1 oder SS2 und der zugehörige Einlernbereich EB1 beziehungsweise EB2 neu berechnet und gespeichert.

Die Mindestdistanz MD der jeweiligen Verstellebene wird ständig zur Kontrolle der zu setzenden Schutzstops SS1 ", SS2" nach einer erkannten Blockierung der Verstellung eingesetzt. Die Distanz zwischen den Schutzstops SS1" und SS2" darf die Mindestdistanz MD nicht unterschreiten. Wenn also für eine Verstellebene bereits eine Schutzstop-Position SS1" gesetzt ist und die Distanz zwischen dieser Schutzstop-Position SS1" und der nach einer nachfolgenden Blockerkennung zu setzenden gegenüberliegenden Schutzstop-Position SS2" kleiner ist als die Mindestdistanz MD, wie in Fig. 1b schematisch dargestellt, werden beide Schutzstops SS1" und SS2" und die Einlernbereiche EB1 und EB2 deaktiviert. Für diesen Fall kann darauf geschlossen werden, daß der Verstellweg VW zumindest teilweise blockiert ist.

Die Erfindung beschränkt sich jedoch nicht auf das zuvor genannte Ausführungsbeispiel. Vielmehr sind weitere erfindungsgemäße Ausführungsformen denkbar, die die Zulassung des Setzen der Schutzstops SS1, SS2 innerhalb der Einlernbereiche EB1, EB2 unter anderen Randbedingungen verknüpfen als die zuvor erwähnten.

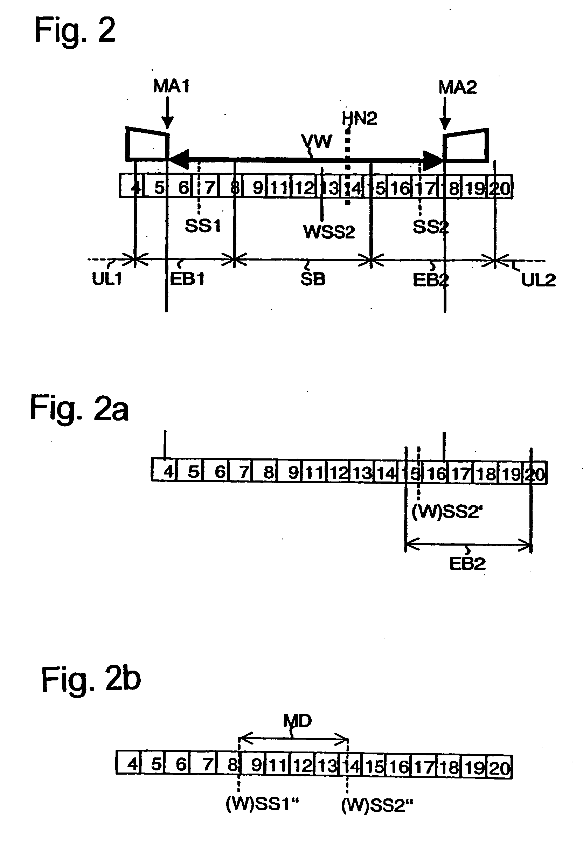

In Fig. 2 ist ein Verstellweg VW einer Kraftfahrzeugsitzverstellung schematisch dargestellt. Der mechanisch mögliche Verstellweg VW erstreckt sich von einem ersten mechanischen Anschlag MA1 (links) bis zu einem zweiten mechanischen Anschlag MA2 (rechts). Beispielsweise handelt es sich in dem vorliegenden Ausführungsbeispiel um eine Sitzlängsverstellung, eine Kopfstützenverstellung oder andere translatorische Verstellungen. In analoger Weise ist das Verfahren zur Steuerung auch auf rotatorische Verstellungen, wie die Verstellung der Neigung der Sitzrückenlehne anwendbar.

Die jeweils aktuelle Position des verstellbaren Teils der Verstelleinrichtung wird durch eine Auswertevorrichtung ermittelt, die in diesem Ausführungsbeispiel die Verstellbewegung mittels eines inkrementalen Gebers und eines zugeordneten Sensors auswertet. Der Verstellweg VW ist demzufolge in eine Vielzahl von Inkrementen unterteilbar. In der Darstellung der Fig. 2 reicht der Verstellweg VW von dem Inkrement mit der Nummer 5 bis zu dem Inkrement mit der Nummer 18. Diese Darstellung ist zur Veranschaulichung stark vereinfacht. Um die Verstellposition hinreichend genau bestimmten zu können, ist eine viel größere Anzahl von Inkrementen, beispielsweise einige zehntausend Inkremente notwendig. Die Erfindung ist dabei nicht auf die Verwendung von inkrementalen Meßsystemen beschränkt, vielmehr können auch alle anderen absoluten und relativen Positionsbestimmungen mit der Erfindung vorteilhaft kombiniert werden.

Um die mechanische Belastung des Verstellsystems zu reduzieren ist jedem mechanischen Anschlag MA1 oder MA2 ein Schutzstop SS1 beziehungsweise SS2, auch als Softstop bezeichnet, zugeordnet. Diese Schutzstops SS1, SS2 sind nicht in Richtung des jeweils zugehörigen mechanischen Anschlages MA1 beziehungsweise MA2 zu überfahren, ohne daß die Verstellenergie derart reduziert wird, daß weder der zugehörige mechanische Anschlag MA1 beziehungsweise MA2 noch das Getriebe oder der Motor der Verstelleinrichtung beschädigt wird. Der Schutzstop SS1, SS2 führt demzufolge in Abhängigkeit von der bestimmten Verstellposition zu einer automatischen Reduktion der Verstellenergie bis zum Stoppen der Verstellbewegung der Verstelleinrichtung im Bereich der mechanischen Blockierung der Verstellbewegung. Hierzu wird der Motor vorzugsweise gebremst, so daß die Verstellbewegung vor oder an dem mechanischen Anschlag MA1 beziehungsweise MA2 oder einem sonstigen Hindernis zum Stillstand kommt, oder daß die verbleibenden auf den jeweiligen Anschlag MA1 beziehungsweise MA2 oder das Hindernis HN2 wirkenden Kräfte nur gering sind oder nicht auftreten.

In der Gegenrichtung, mit zunehmender Distanz zu dem jeweiligen mechanischen Anschlag MA1 beziehungsweise MA2 sind die Schutzstops SS1, SS2 dagegen überfahrbar. Die Distanz der Schutzstops SS1, SS2 zu dem zugehörigen mechanischen Anschlag MA1 beziehungsweise MA2 ist entweder fest vorgebbar, in Fig. 2 beispielsweise ein Inkrement, oder von einer Steuerungsvorrichtung in Abhängigkeit von einer Kenngröße, beispielsweise dem Einsitzgewicht des Kraftfahrzeuginsassen oder dem Verstellweg VW, konfigurierbar.

Stößt der ausgehend von Anschlag MA1 in Richtung des Anschlags MA2 verfahrene Kraftfahrzeugsitz auf ein Hindernis HN2, welches beispielsweise eine zwischen dem Kraftfahrzeugsitz und der Rückbank gestellte Bananenkiste ist, wird die Verstelleinrichtung an dieser Verstellposition (HN2) blockiert. Da eine Unterscheidung zwischen dem mechanischen Anschlag MA2 und der Bananenkiste HN2 nicht ohne weiteres möglich ist, muß das Verstellsystem eine Entscheidung treffen, die die Mechanik vor den Belastungen von zahlreichen Blockierungen schützt, ohne den möglichen Verfahrweg VW dauerhaft einzuschränken. Hierzu wird im Abstand zu der Bananenkiste an der Verstellposition 14 ein wirkungslos schaltbarer Schutzstop WSS2 an der Verstellposition 13 gesetzt. Der Abstand ermöglicht eine Reduktion der Verstellenergie, so daß der Kraftfahrzeugsitz vor Erreichen der Bananenkiste HN2 stoppt, sollte dieser ausgehend von einer Verstellposition kleiner dem Inkrement 13 erneut in Richtung auf die Bananenkiste HN2 verstellt werden.

Ist die Bananenkiste HN2 aus dem Zwischenraum zwischen Kraftfahrzeugsitz und Rückbank entfernt, und möchte der Nutzer des Kraftfahrzeugsitzes diesen über die Verstellposition 13 hinaus in Richtung des mechanischen Anschlags MA2 verstellen, muß dieser Wille des Nutzers durch das Verstellsystem ermittelt werden. Wird hierzu an der Verstellposition 13 nach dem Stoppen der Verstellbewegung die Taste für die Verstellung in derselben Richtung erneut betätigt, wird der Schutzstop WSS2 überdrückt, so daß dessen Wirkung ausgeschalten wird. Daraufhin ist der Sitz bis zum mechanischen Anschlag MA2 verfahrbar.

In dem Ausführungsbeispiel der Fig. 2 ist jedem mechanischen Anschlag MA1 oder MA2 ein Einlernbereich EB1 beziehungsweise EB2 zugeordnet. Dieser Einlernbereich EB1 beziehungsweise EB2 weist Bereichsgrenzen auf, die in Abhängigkeit von dem zugehörigen mechanischen Anschlag MA1, beziehungsweise MA2 errechnet oder vorgegeben werden. In diesem Ausführungsbeispiel reicht der Einlernbereich EB1 des Anschlags MA1 vom Inkrement 4 bis zum Inkrement 8 und der Einlernbereich EB2 vom Inkrement 15 bis zum Inkrement 20. Die Bereichsgrenzen und damit die Breite des Einlernbereichs EB1, EB2 werden entweder fest vorgegeben und erfolgen in fester Positionierung zu dem jeweiligen mechanischen Anschlag MA1, beziehungsweise MA2, oder die Bereichsgrenzen werden beispielsweise in Abhängigkeit von gelernten Parametern oder ermittelten Kenngrößen oder Messgrößen neu konfiguriert.

Die Zählwerte der Auswertevorrichtung zur Positionsbestimmung des verstellbaren Teils der Verstelleinrichtung können durch Messfehler, Speicherfehler oder andere Programmfehler zu einer Verschiebung der ermittelten aktuellen Position zu der realen Position des verstellten Teils der Verstelleinrichtung führen. Dies ist exemplarisch in Fig. 2a dargestellt. Der zuvor ermittelte Schutzstop SS2 befindet sich nach der Verschiebung folglich hinter dem mechanischen Anschlag MA2 (Inkrement 16), also außerhalb des Verstellweges VW. In einem solchen Fall wird zumindest der Schutzstop SS2 neu gesetzt oder aktualisiert. Hierzu wird zunächst ein wirkungslos schaltbarer Schutzstop WSS2' gesetzt, der durch einen von dem Überdrücken unabhängigen, dauerhaften Schutzstop SS2' ersetzt wird, wenn das Verstellsystem aufgrund einer erfüllten Bedingung einer Plausibilitätsprüfung den mechanischen Anschlag MA2 als solchen erkennt.

Die Einlernbereiche EB1, EB2 dienen zur Beschränkung der Zulassung zum Setzen von Schutzstops SS1 beziehungsweise SS2, die jeweils einem Anschlag MA1, MA2 zugeordnet sein können. Zur Auswertung sind mehrere Varianten denkbar. Eine erste Variante sieht vor, daß der neu zu setzende Schutzstop SS2' sich innerhalb des Einlernbereiches EB2 befinden muß, während eine zweite Variante vorsieht, daß ein neuer Schutzstop SS2' nur dann zugelassen wird, wenn sich die neu ermittelte Position des mechanischen Anschlages MA2 innerhalb der Bereichsgrenzen des Einlernbereiches EB2 befindet. Im Folgenden wird diese zweite Variante als Ausführungsbeispiel dargelegt.

Nach dem Einbau des Kraftfahrzeugsitzes in ein Kraftfahrzeug ist das Steuergerät zur Verfahrenssteuerung im Grundzustand. Der Positionszähler ist auf einem Initialwert, beispielsweise 12 vorgegeben. Ebenso sind alle Schutzstoppositionen und alle Grenzen der Einlernbereiche EB1, EB2 auf einen Initialwert eingestellt.

In einem ersten Schritt werden die Verstelleinrichtungen des Sitzes normiert, indem alle Verstellebenen einmal in beide mechanische Anschläge MA1, MA2 verfahren werden. Bei dem Erreichen des jeweiligen mechanischen Anschlages MA1 beziehungsweise MA2 wird die zugehörige Schutzstopposition SS1, SS2 berechnet und in einem EEPROM nichtflüchtig gespeichert. Mit beiderseitigem Abstand um die mechanischen Anschläge MA1, MA2 herum werden die Einlernbereiche EB1 und EB2 berechnet und nichtflüchtig gespeichert. Beispielsweise werden die Bereichsgrenzen hierzu mit einem Inkrementalwert oder einem Prozentwert von der Position des mechanischen Anschlages MA1, MA2 beabstandet.

Die gemessene Wegdifferenz zwischen den mechanischen Anschlägen MA1 und MA2 dient zur Berechnung einer Mindestdistanz MD zwischen den Schutzstops SS1 und SS2, die wiederum für jede Verstellebene separat nichtflüchtig gespeichert werden. Zur Berechnung der Mindestdistanz wird eine vorgegebene Toleranz einbezogen, so daß die Mindestdistanz MD vorzugsweise mehr als achtzig Prozent des maximalen Verstellweges VW entspricht.

Ist die durch den Positionszähler bestimmte Position gegenüber der realen Position nur gering verschoben, kann dies dazu führen, daß ein mechanischer Anschlag MA2 durch ein Blockfahren innerhalb des Einlernbereiches EB2 detektiert wird. In diesem Fall wird der Schutzstop SS2 neu berechnet und als wirkungslos schaltbarer Schutzstop WSS2', wie in Fig. 2a dargestellt, gesetzt und nichtflüchtig gespeichert. Der alte Schutzstop SS2 wird gleichzeitig oder folgend deaktiviert. Nun wird mittels der Plausibilitätsprüfung ermittelt, ob die Bedingung erfüllt ist, die sicherstellt, daß es sich um den mechanischen Anschlag MA2 handelt. Folgend wird der wirkungslos schaltbare Schutzstop WSS2' durch den dauerhaften, von Nutzeraktionen unabhängigen Schutzstop SS2' ersetzt. Danach wird der bisherige Einlernbereich EB2, wie er in der Fig. 2a dargestellt ist, verschoben bis die Bereichsgrenzen im selben Verhältnis zur Position des mechanischen Anschlages MA2 sind, wie zuvor für den vorhergehenden Schutzstop SS2.

Wird innerhalb des Sperrbereiches SB eine Blockierung der Verstellung ermittelt, wird ein Setzen eines Schutzstops, der einem der mechanischen Anschläge MA1, MA2 zugeordnet ist, nicht zugelassen. Zugelassen wird lediglich ein dieser Blockierung (HN2) zugeordneter wirkungslos schaltbarer Schutzstop WSS2. Eine derartige Blockierung (HN2) kann beispielsweise durch die zuvor genannte Bananenkiste oder ein anderes Hindernis HN2 verursacht sein. Dies sollte jedoch nicht zu einer Neunormierung der Sitzverstellung führen, da das Setzen eines Schutzstops SS2 nicht dem jeweiligen Anschlag MA2 zugeordnet wäre. Eine falsche Zuordnung würde dazu führen, daß der verfahrbare Weg des Verstellweges VW durch diesen "falschen" Schutzstop eingeschränkt werden würde.

Wird eine Blockierung aufgrund eines Hindernis HN2 oder eines Anschlages MA1, MA2 innerhalb des Sperrbereiches SB ermittelt, ist für die Steuerungsvorrichtung zunächst unklar, beziehungsweise nicht detektierbar, ob es sich lediglich um ein temporäres Hindernis HN2, wie eine Bananenkiste HN2 oder um einen mechanischen Anschlag MA1, MA2 handelt. Insbesondere kann eine signifikante Verschiebung des Positionszählers, beispielsweise durch einen Laufzeitfehler, zu einem unvermuteten Erreichen eines mechanischen Anschlages MA1, MA2 führen. Um diesen Konflikt zu lösen, werden beide bisherigen von Nutzeraktionen unabhängigen Schutzstops SS1 und SS2 gelöscht oder vorzugsweise deaktiviert. Die bisherigen Einlernbereiche EB1, EB2 und die Mindestdistanz MD bleiben dagegen erhalten. Mit einer Fahrt in einen der erkannten mechanischen Anschläge MA1, MA2 werden die Schutzstops SS1, SS2 neu berechnet, wenn sich die Blockierungsposition innerhalb des Einlernbereiches EB1, EB2 befindet. In diesem Fall wird der zugehörige Einlernbereich EB1 beziehungsweise EB2 ebenfalls mit seinen Bereichsgrenzen neu berechnet.

Bewegt sich das verstellbare Teil der Verstelleinrichtung außerhalb des Verstellweges VW wird der Motor zumindest temporär gestoppt. Wird eine Position außerhalb der Einlernbereiche EB1, EB2 in Überläufen UL1, UL2 bestimmt, werden die Schutzstops SS1, SS2 und die Einlernbereiche EB1, EB2 gelöscht oder deaktiviert. Die gespeicherte Mindestdistanz MD dagegen bleibt erhalten. Wird bei einer erneuten Verstellung durch eine entsprechende Ansteuerung eine Blockierung erkannt, wird der wirkungslos schaltbare Schutzstop WSS2' gesetzt und dieser durch den unabhängigen Schutzstop SS2 (beziehungsweise SS1) bedingungsabhängig ersetzt und der zugehörige Einlernbereich EB2 beziehungsweise EB1 insbesondere neu berechnet und gespeichert.

Die Mindestdistanz MD der jeweiligen Verstellebene wird ständig zur Kontrolle der zu setzenden Schutzstops WSS1", WSS2" nach einer erkannten Blockierung der Verstellung eingesetzt. Die Distanz zwischen den Schutzstops WSS1" und WSS2" darf die Mindestdistanz MD nicht unterschreiten. Wenn also für eine Verstellebene bereits eine Schutzstop-Position WSS1" gesetzt ist und die Distanz zwischen dieser Schutzstop-Position WSS1" und der nach einer nachfolgenden Blockerkennung zu setzenden gegenüberliegenden Schutzstop-Position WSS2" kleiner ist als die Mindestdistanz MD, wie in Fig. 2b schematisch dargestellt, werden beide Schutzstops WSS1" und WSS2" nicht durch von der Nutzeraktion unabhängige Schutzstop SS1" und SS2" ersetzt, und die Einlernbereiche EB1 und EB2 werden deaktiviert. Für diesen Fall kann darauf geschlossen werden, daß der Verstellweg VW zumindest teilweise insbesondere durch einen Gegenstand oder dergleichen blockiert ist. Die Bedingung ist folglich nicht erfüllt.

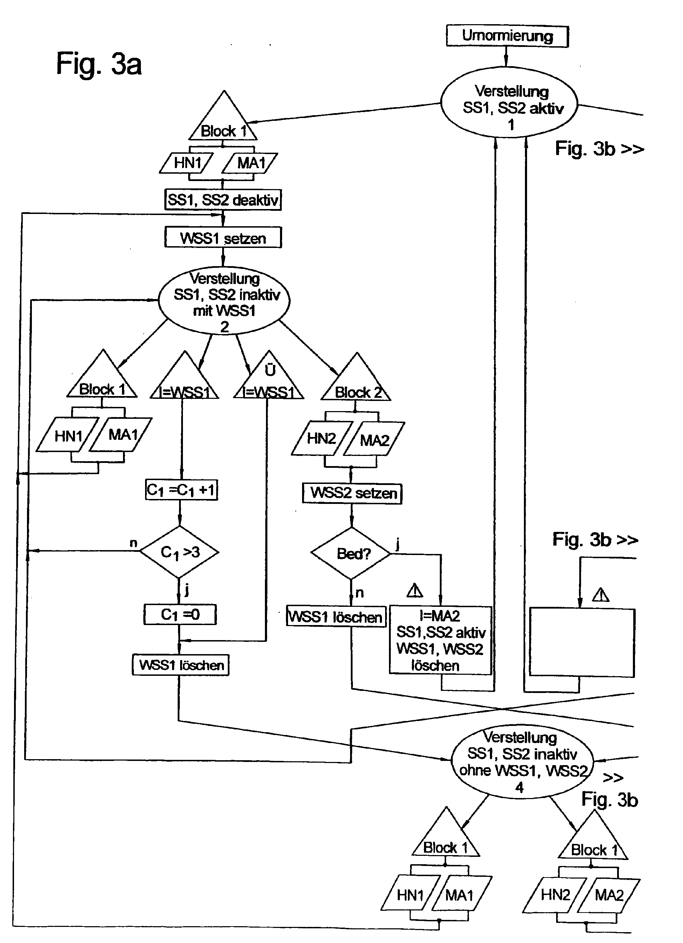

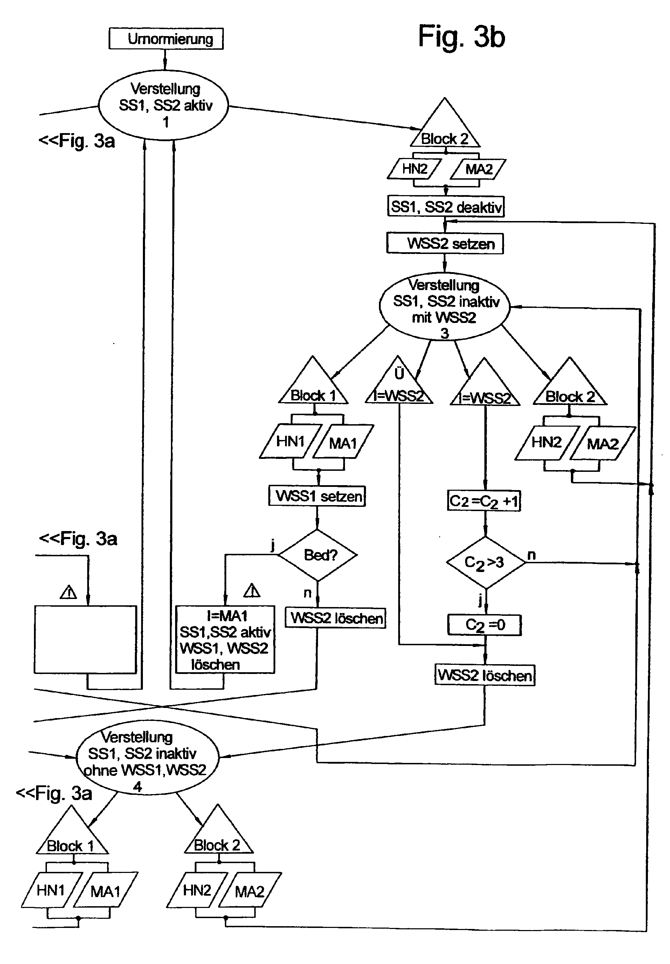

In den Figuren Fig. 3a und Fig. 3b ist ein Verfahrensablauf in Form eines Flußdiagramms schematisch dargestellt. Der linke in Fig. 3a dargestellte Teil des Verfahrens bezieht sich auf eine erstmalige Blockierung am Block 1, der zweite Teil des Verfahrens, der in Fig. 3b dargestellt ist, bezieht sich in analoger Weise auf eine erstmalige Blockierung am gegenüberliegenden zweiten Block 2. Diese Blöcke 1, 2 können dabei Anschläge MA1, MA2 oder andere Arten von Blockierungen, wie Hindernisse HN1, HN2 sein. Im folgenden wird lediglich der Verfahrensablauf für den Block 1 beschrieben, da der zweite Verfahrensteil spiegelbildlich in der Funktionalität ist. Die in dem Ausführungsbeispiel zuvor genannten Einlernbereiche werden in diesem Ausführungsbeispiel der Fig. 3a und Fig. 3b nicht benötigt, können jedoch vorteilhafterweise kombiniert werden. Zudem verbleiben die von Nutzeraktionen unabhängigen Schutzstops SS1 und SS2 an einer festen Verstellposition, wobei der ermittelte Positionswert 1 ggf. normiert wird.

Nach einer Urnormierung am Bandende des Herstellungsprozesses des Kraftfahrzeugs wird die Verstelleinrichtung im Verfahrenszustand 1 durch den Benutzer verfahren. Dabei stoppt die Verstellung jeweils an den von Nutzeraktionen unabhängigen Schutzstops SS1 und SS2. Wird in Richtung des mechanischen Anschlags MA1 ein Block 1 erkannt, wobei es sich hierbei um ein Hindernis HN1 oder um den durch Positionsfehler virtuell verschobenen mechanischen Anschlag MA1 handeln kann, werden die von Nutzeraktionen unabhängigen Schutzstops SS1 und SS2 deaktiviert, verbleiben jedoch mit den zugeordneten Position weiterhin gespeichert.

Nachfolgend wird ein wirkungslos schaltbarer Schutzstop WSS1 im Abstand von der Blockierung Block 1 in den Verstellweg VW gesetzt, und ein Zähler für Last- oder Richtungswechsel wird auf Null gesetzt. Danach kann eine Verstellung im Verfahrenszustand 2 erfolgen, bei dem die von Nutzeraktionen unabhängigen Schutzstops SS1 und SS2 weiterhin deaktiviert, also inaktiv sind und der wirkungslos schaltbare Schutzstop WSS1 ein Schutz vor einem Verfahren in den Block 1 ermöglicht. Zusätzlich werden die Last- oder Richtungswechsel gezählt. Dieser Verfahrenszustand 2 wird beendet, wenn eine der folgenden Ereignisse eintritt.

Zum ersten wird erneut ein Block 1 in Richtung auf den mechanischen Anschlag MA1 erkannt, der demzufolge vor dem vorherigen Block 1 im Verstellweg VW detektiert werden muß, da ansonsten die Verstellbewegung an dem wirkungslos schaltbaren Schutzstop WSS1 gestoppt wird. Dieser erneute Block 1 führt wiederum zu einem erneuten Setzen eines neuen wirkungslos schaltbaren Schutzstop WSS1, der alte wirkungslos schaltbare Schutzstop WSS1 wird dabei gelöscht oder überschrieben.

Zum zweiten wird beim Erreichen des wirkungslos schaltbaren Schutzstops WSS1 ein Schutzstopzählerwert C1 um jeweils einen Zähler erhöht. Überschreitet dieser Zählwert den Schwellwert 3 wird der wirkungslos schaltbare Schutzstop WSS1 gelöscht und das Verfahren geht in den Verfahrenszustand 4 über.

Zum dritten wird im Falle eines Überdrückens Ü des Schutzstops WSS1, das ein Schalten des Schutzstops WSS1 in einen wirkungslosen Zustand bewirkt, der wirkungslos schaltbare Schutzstop WSS1 hierdurch oder nachfolgend gelöscht und das Verfahren geht in den Verfahrenszustand 4 über.

Im Verfahrenszustand 4 sind die von Nutzeraktionen unabhängigen Schutzstops SS1 und SS2 weiterhin deaktiviert und die wirkungslos schaltbaren Schutzstops WSS1, WSS2 gelöscht. Wird ein Block 1 in Richtung des Anschlages MA1 erkannt, wird ein wirkungslos schaltbarer Schutzstops WSS1 gesetzt und nachfolgend im Verfahrenszustand 2 fortgefahren. Wird ein Block 2 dagegen in Richtung des Anschlages MA2 erkannt, wird ein wirkungslos schaltbarer Schutzstops WSS2 gesetzt und nachfolgend im Verfahrenszustand 3 (Fig. 3b) fortgefahren.

Zum vierten wird im Verfahrenszustand 2 mit gesetztem, wirkungslos schaltbarem Schutzstops WSS1 eine Blockierung Block 2 in Richtung des Anschlages MA2 detektiert. Hierbei kann es sich wiederum um ein Hindernis HN2 oder um den mechanischen Anschlag MA2 handeln. Zunächst wird dieser Blockierung Block 2 zugeordnet ein wirkungslos schaltbarer Schutzstops WSS2 gesetzt.

Nachfolgend wird eine Bedingung Bed geprüft. Ist die Bedingung erfüllt wird in Verfahrenszustand 1 das Verfahren fortgesetzt. Anderenfalls, wenn die Bedingung Bed nicht erfüllt ist, wird der dem mechanischen Anschlag MA1 zugeordnete, wirkungslos schaltbare Schutzstop WSS1 gelöscht und im folgenden im Verfahrenszustand 3 (Fig. 3b) das Verfahren fortgesetzt.

Diese Bedingung Bed besteht in diesem Ausführungsbeispiel aus der Plausibilitätsprüfung, daß die Distanz zwischen den beiden wirkungslos schaltbaren Schutzstops WSS1 und WSS2 größer oder gleich einer Mindestdistanz MD ist und zugleich nur wenige Lastwechsel zwischen den beiden Blockierungen Block 1 und Block 2 erfolgt sind. Die Lastwechsel stehen dabei in einem unmittelbaren kausalen Zusammenhang mit bestimmten Positionsfehlern des Verstellsystems, wobei der ermittelte Positionswert I von der realen Position der Verstelleinrichtung erheblich abweichen kann. Sind diese beiden Teilbedingungen der geforderten Genauigkeit der Verstellposition und des Mindestabstandes erfüllt, wird nachfolgend der Positionswert I an der aktuellen Verstellposition am mechanischen Anschlag MA2 neu normiert, die von Nutzeraktionen unabhängigen Schutzstops SS1 und SS2 werden aktiviert und die beiden wirkungslos schaltbaren Schutzstops WSS1 und WSS2 werden gelöscht. Nachfolgend wird, wie bereits erwähnt im Verfahrenszustand 1 weiter verfahren.

Die Erfindung beschränkt sich jedoch nicht auf die zuvor genannten Ausführungsbeispiele. Vielmehr sind weitere erfindungsgemäße Ausführungsformen denkbar, die ein Ersetzen eines wirkungslos schaltbaren Schutzstops durch einen von der Nutzeraktion unabhängigen Schutzstop unter anderen Randbedingungen verknüpfen als die zuvor erwähnten.

Zur Steuerung ist eine Steuerungsvorrichtung der Verstelleinrichtung vorgesehen, die eine Messeinheit und eine Recheneinheit aufweist. Mittels der Messeinheit wird ein elektrisches von der Verstellbewegung abhängiges Signal generiert, daß zur Bestimmung einer Verstellposition innerhalb eines Verstellweges zwischen einem ersten Anschlag und einem zweiten Anschlag dient. Die Auswertung dieses Signals erfolgt durch die Recheneinheit, vorzugsweise einem Mikrocontroller. Weiterhin hat dieser Mikrocontroller Steuerungsfunktionen, die es ermöglichen einen durch eine Nutzeraktion wirkungslos schaltbaren Schutzstops in den Verstellweg zu setzen, wenn eine mechanische Blockierung durch einen Detektor, der aus der Messeinheit und dem Mikrocontroller bestehen kann, detektiert wird. Weiterhin weist der Mikrocontroller Rechenmittel auf, um den wirkungslos schaltbaren Schutzstop durch einen von dieser Nutzeraktion unabhängigen Schutzstop zu ersetzen, wenn die von der Verstellbewegung abhängige Bedingung erfüllt ist. Auch die Abhängigkeit dieser Bedingung kann dabei durch diese Steuerungsvorrichtung aus Recheneinheit und Messeinheit ermittelt werden.

## Patentansprüche

1. Verfahren zur Steuerung einer Verstelleinrichtung eines Kraftfahrzeugs, insbesondere einer Kraftfahrzeugsitzverstellung, die mindestens einen Verstellweg zwischen einem ersten Anschlag und einem zweiten Anschlag aufweist, wobei
- durch eine Nutzeraktion eine Verstellposition der Verstelleinrichtung innerhalb des Verstellweges einstellbar ist,
- die jeweilige Verstellposition innerhalb des Verstellweges bestimmt wird und
- ein Schutzstopp in den Verstellweg gesetzt ist, der in Abhängigkeit von der Verstellposition eine Reduktion der Verstellenergie, insbesondere zum Stoppen der Verstellbewegung im Bereich einer mechanischen Blockierung der Verstellbewegung, auslöst,
**dadurch gekennzeichnet,**
**daß** zur Korrektur der Position des Schutzstopps ein neuer, nicht durch die Nutzeraktion wirkungslos schaltbarer Schutzstopp gesetzt wird, wenn eine von der Verstellbewegung der Verstelleinrichtung abhängige Bedingung erfüllt ist.

2. Verfahren nach Anspruch 1, **dadurch gekennzeichnet, daß** der Schutzstop durch eine Auswertelogik wirkungslos schaltbar ist, die die einzelnen Verstellereignisse der Verstellbewegung auswertet.

3. Verfahren nach Anspruch 2, **dadurch gekennzeichnet, daß** das wirkungslos Schalten des Schutzstops auf der Grundlage der Auswertung der Historie der Verstellereignisse erfolgt.

4. Verfahren nach einem der vorhergehenden Ansprüche, **dadurch gekennzeichnet, daß** als Verstellereignisse der Verstellbewegung solche Ereignisse ausgewertet werden, die ein Stoppen der Verstellbewegung bewirken.

5. Verfahren nach einem der vorhergehenden Ansprüche, **dadurch gekennzeichnet, daß** als Verstellereignisse der Verstellbewegung solche Ereignisse ausgewertet werden, die einem Beginn einer Verstellbewegung entsprechen, und/oder solche Verstellereignisse, die einem Richtungswechsel der Verstellbewegung entsprechen.

6. Verfahren nach einem der vorhergehenden Ansprüche, **dadurch gekennzeichnet, daß** als von der Verstellbewegung abhängige Bedingungen der Ort, die Zeit und/oder die Anzahl einzelner Verstellereignisse der Verstellbewegung herangezogen werden.

7. Verfahren nach einem der vorhergehenden Ansprüche zum Stoppen der Verstellbewegung der Verstelleinrichtung im Bereich einer mechanischen Blockierung der Verstellbewegung, insbesondere zum Stoppen der Verstellbewegung der Verstelleinrichtung im Bereich des Schutzstops, **dadurch gekennzeichnet, daß** zusätzlich zu dem Setzen des Schutzstops ein diesem Schutzstop zugeordneter Einlernbereich bestimmt wird, indem die Bereichsgrenzen des Einlernbereichs in Abhängigkeit von einer Positionscharakteristik, insbesondere von der Position zumindest eines der Anschläge bestimmt werden, und im Falle eines Korrekturbedürfnisses der Position dieses Schutzstops das Setzen eines neuen Schutzstops zugelassen wird, wenn ein insbesondere dem neuen Schutzstop oder dem zugehörigen mechanischen Anschlag zugeordneter Positionswert innerhalb dieses Einlernbereiches liegt.

8. Verfahren nach Anspruch 7, **dadurch gekennzeichnet, daß** zur Bestimmung des Einlernbereiches eine Blockierung der Verstellbewegung an einem der Anschläge bestimmt wird, und die Bereichsgrenzen des Einlernbereiches in Abhängigkeit von der zur Blockierung der Verstellbewegung zugehörigen Verstellposition errechnet werden.

9. Verfahren nach Anspruch 8, **dadurch gekennzeichnet, daß** die Bereichsgrenzen derart berechnet werden, daß die Blockierungsposition auf oder innerhalb der Bereichsgrenzen liegt.

10. Verfahren nach einem der Ansprüche 7 und 9, **dadurch gekennzeichnet, daß** dem ersten mechanischen Anschlag ein erster Einlernbereich und dem zweiten mechanischen Anschlag ein zweiter Einlernbereich zugeordnet ist, und zwischen dem ersten Einlernbereich und dem zweiten Einlernbereich ein Sperrbereich vorgesehen ist, wobei im Sperrbereich das Setzen eines neuen, einem der mechanischen Anschläge zugeordneten Schutzstops verhindert wird.

11. Verfahren nach Anspruch 10, **dadurch gekennzeichnet, daß** zumindest einer der gesetzten Schutzstops deaktiviert wird, wenn innerhalb des Sperrbereiches eine Blockierung der Verstellbewegung bestimmt wird.

12. Verfahren nach einem der Ansprüche 8 oder 11, **dadurch gekennzeichnet, daß** Einlernbereiche und gesetzte Schutzstops deaktiviert werden, wenn eine Verstellposition außerhalb der bisherigen Einlernbereiche und des Sperrbereichs bestimmt wird.

13. Verfahren nach einem der Ansprüche 10 bis 12, **dadurch gekennzeichnet, daß** die Entfernung zwischen einem ersten Schutzstop des ersten mechanischen Anschlags und einem zweiten Schutzstop des zweiten mechanischen Anschlags mit einer Mindestdistanz verglichen wird, und zumindest der eine der Schutzstops geändert wird, wenn die Entfernung gleich oder kleiner ist als die Mindestdistanz.

14. Verfahren nach Anspruch 13, **dadurch gekennzeichnet, daß** beide Schutzstops und die zugehörigen Einlernbereiche deaktiviert werden, wenn die Entfernung gleich oder kleiner ist als die Mindestdistanz.

15. Verfahren nach einem der Ansprüche 13 oder 14, **dadurch gekennzeichnet, daß** die Mindestdistanz für eine Verstelleinrichtung vorgegeben wird, und für den Vergleich aus einem nichtflüchtigen Speicher ausgelesen wird.

16. Verfahren nach einem der Ansprüche 13 bis 15, **dadurch gekennzeichnet, daß** die Mindestdistanz aus einem gemessenen maximalen Verstellweg errechnet wird.

17. Verfahren nach einem der Ansprüche 7 bis 16, **dadurch gekennzeichnet, daß** die Verstellgeschwindigkeit zumindest innerhalb der Einlernbereiche reduziert wird.

18. Verfahren nach einem der Ansprüche 7 bis 17, **dadurch gekennzeichnet, daß** Schutzstops und Einlernbereiche in einer Recheneinheit berechnet und anschließend in einem nichtflüchtigen Speicher gespeichert werden.

19. Verfahren nach einem der Ansprüche 7 bis 18, **dadurch gekennzeichnet, daß** in Abhängigkeit von der Bestimmung einer ersten Position des dem ersten mechanischen Anschlag zugeordneten ersten Schutzstops eine zweite Position des dem zweiten mechanischen Anschlag zugeordneten zweiten Schutzstops bestimmt wird.

20. Verfahren nach Anspruch 19, **dadurch gekennzeichnet, daß** im Falle eines Korrekturbedürfnisses der Position eines der Schutzstops
- der Fehler der Position dieses Schutzstops ermittelt wird,
- die gewünschte Position dieses Schutzstops bestimmt und dieser korrigiert wird, und
- in Abhängigkeit von dieser aktuellen Position die Position des anderen, dem anderen Anschlag zugeordneten Schutzstops bestimmt und korrigiert wird.

21. Verfahren nach Anspruch 19, **dadurch gekennzeichnet, daß** die Verstellposition einem Positionswert zugeordnet wird, der zur Zuordnung in Abhängigkeit von der Verstellung der Verstellvorrichtung verändert wird, der Positionswert korrigiert wird, wenn eine Verschiebung des Positionswertes zur aktuellen Verstellposition ermittelt wird, und zur Korrektur der aktuelle Positionswert relativ positionsverändert zur Position zumindest eines Schutzstops auf diese aktuelle Verstellposition gesetzt wird.

22. Verfahren nach den Ansprüchen 19 und 21, **dadurch gekennzeichnet, daß** zur Korrektur der aktuelle Positionswert auf diese aktuelle Verstellposition gesetzt wird, wobei relativ zu den voneinander abhängigen Positionen des ersten Schutzstops und des zweiten Schutzstops der Positionswert verändert wird.

23. Verfahren nach einem der Ansprüche 21 oder 22, **dadurch gekennzeichnet, daß** zur Zuordnung der Verstellposition zu dem Positionswert der Positionswert ein Zählwert ist, der in Abhängigkeit von der Antriebsbewegung eines Antriebs der Verstelleinrichtung inkrementiert oder dekrementiert wird.

24. Verfahren nach einem der Ansprüche 21 bis 23, **dadurch gekennzeichnet, daß** die Position des ersten Schutzstops und die Position des zweiten Schutzstops als für die Korrektur unveränderliche Werte gespeichert werden.

25. Verfahren nach einem der Ansprüche 21 bis 24, **dadurch gekennzeichnet, daß** die Korrektur des Positionswertes in Abhängigkeit von einer zur Blockierung der Verstellbewegung zugehörigen Verstellposition errechnet wird, so daß der erste Schutzstop im Bereich des ersten mechanischen Anschlages und der zweite Schutzstop im Bereich des zweiten mechanischen Anschlages positioniert ist.

26. Verfahren nach einem der Ansprüche 21 bis 25, **dadurch gekennzeichnet, daß** zumindest einer der Schutzstops deaktiviert wird, wenn eine Verschiebung des Positionswertes zur aktuellen mechanischen Verstellposition im Verstellweg ermittelt wird.

27. Verfahren nach einem der Ansprüche 19 bis 26, **dadurch gekennzeichnet, daß** der erste Schutzstop und der zweite Schutzstop um eine vorgebbare oder ermittelbare Mindestdistanz abhängig voneinander positioniert angeordnet sind.

28. Verfahren nach einem der Ansprüche 19 bis 27, **dadurch gekennzeichnet, daß** der Verstellweg auf eine virtuelle Positionsachse abgebildet wird, auf dieser virtuellen Positionsachse die Position des ersten Schutzstops und die Position des vom ersten Schutzstop abhängigen zweiten Schutzstops fest angeordnet werden, die aktuelle Verstellposition einem Positionswert auf der virtuellen Positionsachse zugeordnet wird, und diese virtuelle Positionsachse zum Verstellweg ausgerichtet wird, wenn eine Verschiebung der virtuellen Positionsachse zum Verstellweg ermittelt wird.

29. Verfahren nach Anspruch 28, **dadurch gekennzeichnet, daß** die Verschiebung der Positionsachse zum Verstellweg in Abhängigkeit von einer zur Blockierung der Verstellbewegung zugehörigen Verstellposition errechnet wird, so daß der erste Schutzstop im Bereich des ersten mechanischen Anschlages und der zweite Schutzstop im Bereich des zweiten mechanischen Anschlages positioniert ist.

30. Verfahren nach einem der Ansprüche 28 oder 29, **dadurch gekennzeichnet, daß** zumindest einer der Schutzstops deaktiviert wird, wenn eine Verschiebung der virtuellen Positionsachse zum Verstellweg ermittelt wird.

31. Verfahren nach einem der Ansprüche 19 bis 30, **dadurch gekennzeichnet, daß** zumindest einer der Schutzstops zumindest temporär deaktiviert wird, wenn nach einem Schutzstop-bedingten Stoppen der Verstellbewegung die Verstelleinrichtung erneut einmalig oder mehrmalig in die vorhergehende Verstellrichtung angesteuert wird.

32. Verfahren nach einem der Ansprüche 19 bis 31, **dadurch gekennzeichnet, daß** zumindest einer der Schutzstops zumindest temporär deaktiviert wird, wenn eine vorbestimmte Anzahl von Verstellungen der Verstelleinrichtung erreicht wird.

33. Verfahren nach einem der Ansprüche 19 bis 32, **dadurch gekennzeichnet, daß** dem ersten mechanischen Anschlag ein erster Einlernbereich und dem zweiten mechanischen Anschlag ein zweiter Einlernbereich zugeordnet ist, zwischen dem ersten Einlernbereich und dem zweiten Einlernbereich ein Sperrbereich vorgesehen ist, und zumindest einer der Schutzstops deaktiviert wird, wenn innerhalb des Sperrbereiches eine Blockierung der Verstellbewegung bestimmt wird.

34. Verfahren nach einem der vorhergehenden Ansprüche, **dadurch gekennzeichnet, daß** im Falle einer Detektion einer mechanischen Blockierung ein durch eine Nutzeraktion wirkungslos schaltbarer Schutzstop gesetzt wird, und der wirkungslos schaltbare Schutzstop durch einen von dieser Nutzeraktion unabhängigen Schutzstop ersetzt wird, wenn eine von der Verstellbewegung abhängige Bedingung erfüllt ist.

35. Verfahren nach Anspruch 34, **dadurch gekennzeichnet, daß** die Bedingung von einer Verstellbewegung in einen der Anschläge abhängig ist.

36. Verfahren nach Anspruch 35, **dadurch gekennzeichnet, daß** als Bedingung die Position des der Blockierung im Verstellweg entgegengesetzten Anschlags ermittelt wird.

37. Verfahren nach Anspruch 35, **dadurch gekennzeichnet, daß** der entgegengesetzte Anschlag anhand eines Mindestabstands der beiden Blockierungen ermittelt wird.

38. Verfahren nach einem der Ansprüche 35 bis 37, **dadurch gekennzeichnet, daß** für die Blockierung der Verlauf einer Verstellgröße ausgewertet wird, und als Bedingung dieser Verlauf einem für einen Anschlag charakteristischen Verlauf der Verstellgröße zugeordnet wird.

39. Verfahren nach einem der Ansprüche 34 bis 38, **dadurch gekennzeichnet, daß** als Bedingung die Blockierung an einem der Anschläge sensiert wird.

40. Verfahren nach einem der Ansprüche 34 bis 39, **dadurch gekennzeichnet, daß** die Ungenauigkeit der bestimmten Verstellposition ermittelt wird, und als Bedingung die Ungenauigkeit ein Kriterium erfüllt, insbesondere einen Maximalwert nicht überschreitet.

41. Verfahren nach Anspruch 40, **dadurch gekennzeichnet, daß** die Ungenauigkeit durch eine Anzahl der Verstellungen ermittelt wird, und als Bedingung die Anzahl der Verstellungen einen Maximalwert nicht überschreitet.

42. Verfahren nach einem der Ansprüche 40 bis 42, **dadurch gekennzeichnet, daß** die Ungenauigkeit durch eine Anzahl der Richtungswechsel der Verstellung ermittelt wird, und als Bedingung die Anzahl der Richtungswechsel der Verstellung einen Maximalwert nicht überschreitet.

43. Verfahren nach einem der Ansprüche 40 bis 42, **dadurch gekennzeichnet, daß** die Ungenauigkeit durch die Bestimmung eines detektierten Einbruchs der Versorgungsspannung der Verstelleinrichtung ermittelt wird, und als Bedingung der Einbruch der Versorgungsspannung nicht während einer Verstellung detektiert wird.

44. Verfahren nach einem der Ansprüche 34 bis 43, **dadurch gekennzeichnet, daß** als Bedingung eine von einer Blockierung unabhängige Verstellposition im Verstellweg zwischen den Anschlägen sensiert wird.

45. Verfahren nach einem der Ansprüche 34 bis 44, **dadurch gekennzeichnet, daß** mittels eines Einklemmdetektors ein Einklemmen von Gegenständen und/oder Personen durch die Verstelleinrichtung des Kraftfahrzeugs detektiert wird, und als Bedingung vor dem Ersetzen kein Einklemmen detektiert worden ist.

46. Verfahren nach einem der Ansprüche 34 bis 45, **dadurch gekennzeichnet, daß** die Verstelleinrichtung in einem Normierungsmodus betrieben wird, und als Bedingung in diesem Normierungsmodus die Blockierung an den Anschlägen erfolgt.

47. Verfahren nach einem der Ansprüche 34 bis 46, **dadurch gekennzeichnet, daß** die Nutzeraktion durch die manuelle Betätigung einer Bedienvorrichtung zur Ansteuerung der Verstelleinrichtung erfolgt.

48. Verfahren nach Anspruch 47, **dadurch gekennzeichnet, daß** die Nutzeraktion durch die erneute manuelle Betätigung des der Verstellbewegungsrichtung zugeordneten Betätigungselementes der Bedienvorrichtung nach Setzen des wirkungslos schaltbaren Schutzstops erfolgt.

49. Verfahren nach Anspruch 48, **dadurch gekennzeichnet, daß** die Nutzeraktion durch die manuelle Betätigung eines (zusätzlichen) Freigabebetätigungselementes erfolgt.

50. Verfahren nach einem der Ansprüche 34 bis 49, **dadurch gekennzeichnet, daß** die Nutzeraktion interaktiv mittels einer Eingabeeinheit und einer Ausgabeeinheit zwischen der Verstelleinrichtung und dem Nutzer erfolgt.

51. Verfahren nach einem der Ansprüche 34 bis 50, **dadurch gekennzeichnet, daß** zur Ersetzung des wirkungslos schaltbaren Schutzstops durch den von der Nutzeraktion unabhängigen Schutzstop dieser Schutzstop von als wirkungslos schaltbarer zum von der Nutzeraktion unabhängigen Schutzstop verändert wird.

52. Verfahren nach einem der Ansprüche 34 bis 51, **dadurch gekennzeichnet, daß** zur Ersetzung des wirkungslos schaltbaren Schutzstops durch den von der Nutzeraktion unabhängigen Schutzstop der wirkungslos schaltbare Schutzstop gelöscht wird und der von der Nutzeraktion unabhängige Schutzstop aktiviert wird.

53. Verfahren nach einem der Ansprüche 34 bis 52, **dadurch gekennzeichnet, daß** mit dem Setzen des (ersten) Schutzstops aufgrund der Detektion der mechanischen Blockierung ein zweiter Schutzstop gesetzt wird, der dem der Blockierung im Verstellweg entgegengesetzten Anschlag zugeordnet ist, und bei Erreichen dieses zweiten Schutzstops beide Schutzstops durch von der Nutzeraktion unabhängige Schutzstops ersetzt werden.

54. Verfahren nach Anspruch 53, **dadurch gekennzeichnet, daß** bei Nicht-Erreichen dieses zweiten Schutzstops im Falle einer erneuten Blockierung erneut ein zweiter Schutzstop der aktuellen Blockierung im Verstellweg gegenüberliegend gesetzt wird.

55. Verfahren nach einem der Ansprüche 53 oder 54, **dadurch gekennzeichnet, daß** der gesetzte Schutzstop ein durch eine Nutzeraktion wirkungslos schaltbarer Schutzstop ist, wobei die von der Verstellbewegung abhängige Bedingung das Erreichen des zweiten Schutzstops ist.

56. Verfahren nach einem der Ansprüche 53 bis 55, **dadurch gekennzeichnet, daß** der zweite Schutzstop eine vorgebbare oder ermittelbare Mindestdistanz im Verstellweg von der Blockierung oder der gesetzten ersten Schutzstop entfernt gesetzt wird, wobei die Mindestdistanz von einem gewünschten Verfahrweg abhängig ist.

57. Verfahren nach einem der Ansprüche 34 bis 56, **dadurch gekennzeichnet, daß** die Verstellposition einem Positionswert zugeordnet wird, der zur Zuordnung in Abhängigkeit von der Verstellung der Verstellvorrichtung verändert wird, der Positionswert korrigiert wird, wenn eine Verschiebung des Positionswertes zur aktuellen Verstellposition ermittelt wird, und zur Korrektur der aktuelle Positionswert auf diese aktuelle Verstellposition gesetzt wird.

58. Verfahren nach Anspruch 57, **dadurch gekennzeichnet, daß** der Positionswert korrigiert wird, wenn die von der Verstellbewegung abhängige Bedingung erfüllt ist.

59. Verfahren nach einem der Ansprüche 34 bis 58, **dadurch gekennzeichnet, daß** zusätzlich zu dem Schutzstop ein diesem Schutzstop zugeordneter Einlernbereich bestimmt wird, dessen Bereichsgrenzen in Abhängigkeit von der Position desselben Schutzstops gesetzt werden, und im Falle eines Korrekturbedürfnisses der Position desselben Schutzstops das Setzen eines neuen Schutzstops zugelassen wird, wenn ein insbesondere dem neuen Schutzstop oder der Blockierung zugeordneter Positionswert innerhalb dieses Einlernbereiches liegt.

60. Verfahren nach Anspruch 59, **dadurch gekennzeichnet, daß** die Bereichsgrenzen des Einlernbereichs gesetzt werden, wenn der Einlernbereich dem von der Nutzeraktion unabhängigen Schutzstop zugeordnet wird.

61. Verfahren nach einem der Ansprüche 7 bis 60, **dadurch gekennzeichnet, daß** im Falle einer Detektion einer mechanischen Blockierung ein erster durch eine Nutzeraktion wirkungslos schaltbarer Schutzstop gesetzt wird, ein zweiter durch eine Nutzeraktion wirkungslos schaltbarer Schutzstop gesetzt wird, der dem der Blockierung im Verstellweg entgegengesetzten Anschlag zugeordnet und von dem ersten Schutzstop durch eine vorgebbare oder berechnete Mindestdistanz entfernt ist, und der erste und der zweite wirkungslos schaltbare Schutzstop jeweils durch einen von dieser Nutzeraktion unabhängigen Schutzstop ersetzbar sind, wenn die Verstellposition die Position des zweiten wirkungslos schaltbaren Schutzstops erreicht.

62. Verfahren nach Anspruch 61, **dadurch gekennzeichnet, daß** eine oder mehrere Memorypositionen, die zu einem automatischen Verfahren der Verstelleinrichtung in diese Memorypositionen dienen, in Relation zu den Schutzstops gesetzt werden und im Falle der Blockierung mit dem erneuten Setzen der Schutzstops aktualisiert werden.

63. Verfahren nach einem der Ansprüche 61 oder 62, **dadurch gekennzeichnet, daß** im Falle einer Verstellposition außerhalb des Bereiches zwischen dem ersten Schutzstop und dem zweiten Schutzstop die von der Nutzeraktion unabhängigen Schutzstop oder die durch eine Nutzeraktion wirkungslos schaltbare Schutzstops deaktiviert werden, und die Verstellposition auf einen Wert zwischen die beiden Schutzstoppositionen gesetzt wird.

64. Verfahren nach den Ansprüchen 62 und 63, **dadurch gekennzeichnet, daß** die Memorypositionen in diesem Fall deaktiviert oder auf den aktuellen Wert der Verstellposition gesetzt werden.

65. Verfahren nach einem der Ansprüche 61 bis 64, **dadurch gekennzeichnet, daß** die Mindestdistanz aus dem Abstand der Anschläge während einer Urnormierung berechnet wird.
